# EUROPEAN PATENT APPLICATION

(11) **EP 4 825 931 A1**
(43) Date of publication of application: **21.10.2026**
(21) Application number: 24903197.2
(22) Date of filing: 03.07.2024
(51) Int. Cl.: C09D 11/322, B41J 2/01, B41M 5/00, C09D 11/326

(54) **AQUEOUS INKJET INK AND PRINTED WORK**

(30) Priority: 13.12.2023 JP 2023209882
(71) Applicant: artience Co., Ltd., Chuo-ku Tokyo 104-0031 (JP); TOYOCOLOR CO., LTD., Tokyo 104-8381 (JP)
(72) Inventor: FUJIKAWA Yoshino, Tokyo 104-8381 (JP); SUGIHARA Masahiro, Tokyo 104-8381 (JP)
(74) Representative: SSM Sandmair
(86) International application number: PCT/JP2024/024133
(87) International publication number: WO 2025/126533

(57) **Abstract**

The present invention relates to an aqueous inkjet ink containing pigment particles, surfactants, and an organic solvent, wherein the pigment particles contain a pigment and a pigment dispersing resin, the pigment dispersing resin has a crosslinked structure, the surfactants include an acetylenediol-based surfactant (A-1) having a measured HLB value within a range from 6 to 9 and a siloxane-based surfactant (A-2) having a measured HLB value within a range from 8 to 14, and the organic solvent contains an alkanediol having 5 to 8 carbon atoms (but excluding 1,2-alkanediols of 5 to 8 carbon atoms) and/or a (di)propylene glycol monoalkyl ether represented by a specific structural formula.

## Description

### TECHNICAL FIELD

The present invention relates to an aqueous inkjet ink and a printed item produced using the aqueous inkjet ink.

### BACKGROUND ART

Inkjet printing method is a recording method in which liquid droplets of an ink that are jetted directly from fine nozzles and adhered to a printing substrate to obtain text and/or images. As the inkjet printing method not only offers the advantages of reduced noise from the printing device and easy operability, but also provides numerous advantages such as easy printing in full-color, low-cost printing devices, and the ability to conduct contactless printing to a wide variety of printing substrates, it is becoming remarkably widespread. Particularly in recent years, the use of inkjet printing is becoming more common not only in consumer applications such as office and household printing, but also in commercial printing and industrial printing applications. Within these applications, the demand for inkjet inks containing water as the main component (aqueous inkjet inks), which are designed for the purpose of reducing the impact on the environment and the operators, continues to grow.

The above term "image" includes seamless images such as a solid image and a checkered pattern image.

The development of aqueous inkjet inks for use with plain paper and exclusive paper printing substrates has a long history. In these types of applications, it is assumed that the liquid component of the aqueous inkjet ink is absorbed into the interior of the printing substrate. Consequently, if these types of aqueous inkjet inks are printed onto the types of low-absorption printing substrates used in the commercial printing and industrial printing applications described above, the image tends to bleed, and printed items that can withstand practical use cannot be produced.

For example, standard coated papers, which are low-absorption printing substrates, exhibit low absorption of the liquid component. Therefore during printing, if a liquid droplet of the aqueous inkjet ink impacts the printing substrate adjacent to a previously jetted liquid droplet that has not yet dried, a phenomenon (known as beading) in which the adjacent droplets coalesce tends to occur. Beading can cause mixed color bleeding in printed items. Further, some low-absorption printing substrates, including standard coated papers, have low surface free energy, and when conducting printing to such substrates, aqueous inkjet inks tend to exhibit poor wet spreadability across the surface, increasing the likelihood of white voids (a phenomenon in which spots and/or streaks appear on the printed surface where the aqueous inkjet ink has not adhered).

One possible method for improving beading involves improving the drying properties of the aqueous inkjet ink so that liquid droplets of the ink are able to dry before the subsequent liquid droplets impact the printing substrate. However, aqueous inkjet inks with faster drying properties tend to also dry readily in the vicinity of the nozzles, and as a result, there is a possibility that a dry coating film of the aqueous inkjet ink may become affixed to a nozzle outlet. If this affixed dried coating film is retained at the nozzle outlet, it can cause a deterioration in the impact accuracy of the aqueous inkjet ink or even a nozzle clogging. Accordingly, aqueous inkjet inks used in inkjet printing methods preferably exhibit "resolubility" in which the type of dried coating film described above can be redissolved. However, imparting an aqueous inkjet ink with resolubility is extremely difficult.

Furthermore, another method for improving beading involves lowering the surface tension of the aqueous inkjet ink, and this is generally achieved by using a surfactant or organic solvent of high hydrophobicity.

For example, Patent Document 1 discloses an ink composition for inkjet recording that contains three types of acetylenediol-based surfactants having different structures. According to Patent Document 1, this ink composition enables images having excellent printed image quality (in terms of color unevenness, aggregation and bleeding) and superior fixability (abrasion resistance) to be recorded at high speed to a variety of printing substrates having different absorption properties. Further, Patent Document 2 discloses an aqueous ink composition containing a nonionic surfactant having an HLB value within a range from 4 to 14. According to Patent Document 2, this ink composition enables printed items having excellent wet spreadability, fineness, print density, water resistance and rubbing resistance (abrasion resistance) and no aggregation to be obtained on offset media which may be printed with offset inks.

On the other hand, Patent Document 3 discloses an aqueous ink for inkjet printing that aims to simultaneously address the issues of mixed color bleeding and the resolubility (redispersibility) described above. Specifically, Patent Document 3 discloses an aqueous ink containing a pigment, a polymer dispersant (which preferably includes a polymer that has been crosslinked with a crosslinking agent), and a specific water-soluble organic solvent. Furthermore, Example 2 in Patent Document 3 describes a specific example of the aqueous ink that contains pigment particles containing a polymer dispersant having a crosslinked structure, an acetylenediol-based surfactant SURFYNOL 440, a siloxane-based surfactant SILFACE SAG005, and a water-soluble organic solvent such as 1,6-hexanediol (see paragraphs 0068 and 0072, and Table 2 of Patent Document 3).

### PRIOR ART DOCUMENTS

### PATENT DOCUMENTS

Patent Document 1: JP 2015-124238 A
Patent Document 2: JP 2004-510028 A
Patent Document 3: JP 2020-105298 A

### SUMMARY OF THE INVENTION

### PROBLEMS TO BE SOLVED BY THE INVENTION

However, in the case of the aqueous inkjet inks disclosed in the above Patent Documents 1 and 2, no evaluations were conducted in relation to the jetting stability, which is an essential condition when using an ink in an inkjet printing method. As discussed in further detail below, depending on the other materials used, the effect of the material of high hydrophobicity mentioned above may not develop satisfactorily, and there is also a possibility of a deterioration in the jetting stability of the aqueous inkjet ink.

Further, when the inventors of the present invention evaluated the aqueous inkjet ink having the composition described in Example 2 of the above Patent Document 3, they discovered that although the resolubility was favorable, the shape of the liquid droplets of the aqueous inkjet ink tended to deform (with poor dot circularity), and white voids sometimes occurred depending on the printing conditions.

As mentioned above, until now, no aqueous inkjet ink has been able to simultaneously satisfy, to a high degree, the requirements for favorable jetting stability and resolubility, together with superior dot circularity and ink wet spreadability (resulting in reduced white voids).

Accordingly, one embodiment of the present invention has the object of providing an aqueous inkjet ink which has excellent resolubility and jetting stability, and yields excellent printed image quality on various printing substrates. Further, another embodiment of the present invention has the object of providing a printed item having excellent printed image quality on various printing substrates.

### MEANS TO SOLVE THE PROBLEMS

In light of the above background and as a result of diligent investigation, the inventors of the present invention discovered an aqueous inkjet ink described below, enabling them to complete the present invention.

In other words, one embodiment of the present invention relates to an aqueous inkjet ink containing pigment particles, surfactants, and an organic solvent, wherein
the pigment particles contain a pigment and a pigment dispersing resin,
the pigment dispersing resin has a crosslinked structure,
the surfactants include an acetylenediol-based surfactant (A-1) having a measured HLB value within a range from 6 to 9, and a siloxane-based surfactant (A-2) having a measured HLB value within a range from 8 to 14, and
the organic solvent contains an alkanediol having 5 to 8 carbon atoms (but excluding 1,2-alkanediols of 5 to 8 carbon atoms) and/or a glycol monoether represented by a general formula 1 shown below.

   General formula 1: R¹-(O-CH(CH₃)-CH₂)ₙ-OH
(In general formula 1, R¹ represents an alkyl group of 2 to 4 carbon atoms, and n represents 1 or 2.)

Further, another embodiment of the present invention relates to a printed item obtained by printing the aqueous inkjet ink described above.

### EFFECTS OF THE INVENTION

The aqueous inkjet ink representing one embodiment of the present invention has excellent resolubility and jetting stability, and yields excellent printed image quality on various printing substrates such as standard coated papers. Further, the printed item that represents another embodiment of the present invention exhibits excellent printed image quality on various printing substrates.

### EMBODIMENTS FOR CARRYING OUT THE INVENTION

An aqueous inkjet ink that represents one embodiment of the present invention (hereinafter, also referred to as simply "the aqueous inkjet ink of an embodiment of the present invention") is described below. The present invention is not limited to the following embodiments, and also includes other variations, provided they do not alter the essential aspects of the present invention.

The aqueous inkjet ink of an embodiment of the present invention exhibits excellent resolubility and jetting stability, and yields excellent printed image quality on various printing substrates, and particularly on standard coated papers. Although the mechanisms that yields these characteristics are not entirely clear, the inventors of the present invention surmise the following. However, the present invention is in no way restricted by these hypotheses.

First, a description of resolubility will be explained. As mentioned above, if aqueous inkjet ink in the vicinity of the nozzles dries and the resulting dried coating film becomes affixed to a nozzle outlet, then this can cause a deterioration in the jetting stability of the aqueous inkjet ink. As a result, it is desirable that the aqueous inkjet ink has resolubility. In this regard, the inventors of the present invention discovered that ensuring that the pigment dispersing resin adsorbed to and/or coating the pigment does not desorb even after the liquid component of the inkjet ink has evaporated was an important factor in improving the resolubility. Accordingly, in embodiments of the present invention, by using a pigment coated with a pigment dispersing resin having a crosslinked structure, desorption of the pigment dispersing resin could be inhibited, yielding an improvement in the resolubility. Further, with the aqueous inkjet ink of an embodiment of the present invention, the ink also exhibits excellent jetting stability because any dried coating film adhered to a nozzle outlet can be readily returned to the aqueous inkjet ink. Moreover, the phenomenon wherein the surfactants described below adsorb to any desorbed pigment dispersing resin, thereby inhibiting interface orientation of the surfactants, can also be prevented. Since those functions of these surfactants can therefore develop satisfactorily, it is thought that the wetting properties of the aqueous inkjet ink improve, leading to an improvement in the printed image quality.

Next, a description of printed image quality will be explained. Surface tension is generally exemplified as a factor that affects printed image quality. The surface tension of an aqueous inkjet ink is mainly controlled with surfactants. For example, acetylenediol-based surfactants and siloxane-based surfactants and the like are used as these surfactants.

The inventors of the present invention discovered that by using an acetylenediol-based surfactant (A-1) having a measured HLB value within a range from 6 to 9 and a siloxane-based surfactant (A-2) having a measured HLB value within a range from 8 to 14, the wetting properties of the aqueous inkjet ink relative to the printing substrate can be improved remarkably. The acetylenediol-based surfactant (A-1) having a measured HLB value within a range from 6 to 9 has low affinity with water and orients rapidly at the interface. As a result, when the ink droplets of the aqueous inkjet ink impact the printing substrate, a marked improvement in the wetting properties of the aqueous inkjet ink can be expected. However, if only the acetylenediol-based surfactant (A-1) is used, then achieving a uniform orientation at the interface is difficult, thus, the dot circularity deteriorates and unevenness in solid printed portions tends to occur, resulting in the printed image quality to become unsatisfactory.

Accordingly, in embodiments of the present invention, by using a combination of the acetylenediol-based surfactant (A-1) having a measured HLB value within a range from 6 to 9 and the siloxane-based surfactant (A-2) having a measured HLB value within a range from 8 to 14, improvements in the dot circularity and printing unevenness can be achieved. Although the exact principles are unclear, the siloxane-based surfactant (A-2) , as in the same manner with acetylenediol-based surfactant (A-1), exhibits an excellent surface tension lowering ability. However, because the measured HLB value is higher, orientation of the surfactant at the gas-liquid interface occurs more slowly than the acetylenediol-based surfactant (A-1). As a result, it is thought that the siloxane-based surfactant (A-2) orients in such a manner that resolves any non-uniformity in the orientation by the acetylenediol-based surfactant (A-1), thereby ensuring uniform spreading of the ink droplets of the aqueous inkjet ink and contributing to a reduction in unevenness within solid printed portions. Although described below in further detail, in a preferred embodiment, the surface tension lowering ability can be remarkably improved by using a siloxane-based gemini surfactant as the above siloxane-based surfactant (A-2). Furthermore, as a result, the wetting properties of the aqueous inkjet ink containing the siloxane-based gemini surfactant can be markedly improved, and therefore the printed image quality improved significantly. Further, in another preferred embodiment, a siloxane-based surfactant having both terminals modified with a polyether may be used as the siloxane-based surfactant (A-2). In such cases, although the principles are not entirely clear, as well as improved uniformity in the wet spreadability on the printing substrate, an improvement in jetting stability can also be achieved.

On the other hand, by using a combination of a pigment coated with the pigment dispersing resin having a crosslinked structure described above, an acetylenediol-based surfactant and a siloxane-based surfactant, there is a possibility that pinholes (hole-shaped voids in locations where the aqueous inkjet ink should have been printed) may occur in the printed items due to poor miscibility. Moreover, in aqueous inkjet inks using a combination of the above components, the jetting stability may also deteriorate. One possible reason for this deterioration in jetting stability is that when the liquid component evaporates in the vicinity of the nozzles of the inkjet head, the miscibility balance may be disrupted, resulting in non-uniform orientation of the surfactants in the aqueous inkjet ink located near the nozzles.

As a result of diligent investigation by the inventors of the present invention, they discovered the effects of using an alkanediol having 5 to 8 carbon atoms (but excluding 1,2-alkanediols of 5 to 8 carbon atoms) and/or a glycol monoether represented by the above general formula 1 in combination with the components described above. It is thought that by using a combination of these compounds with the acetylenediol-based surfactant and the siloxane-based surfactant, the miscibility between the compounds and the surfactants can be improved. Further, alkanediols having 5 to 8 carbon atoms (but excluding 1,2-alkanediols of 5 to 8 carbon atoms) and/or glycol monoethers represented by the above general formula 1 are all compounds having a low surface tension, and therefore the acetylenediol-based surfactant and the siloxane-based surfactant that exhibit affinity with these compounds are more likely to orient uniformly across the entire surface of the printed item. As a result, the occurrence of pinholes in the printed item can be suppressed. Moreover, it is also thought that the meniscus of the aqueous inkjet ink can be stabilized inside the inkjet head, enabling a further improvement in the jetting stability.

As outlined above, in order to address the issues described above simultaneously and to a high degree, the aqueous inkjet ink of an embodiment of the present invention is essential.

The aqueous inkjet inks specifically disclosed in the above Patent Documents 1 and 2 differ from the present invention that it does not use crosslinked polymer particles containing a pigment. Further, in Patent Documents 1 and 2, there is no description nor suggestion of the use of a polymer having a crosslinked structure as the dispersion polymer, or of the fact that use of such a polymer having a crosslinked structure can improve the resolubility and jetting stability, and further enable more satisfactory development of the effects of the surfactants. Moreover, the specified acetylenediol-based surfactant SURFYNOL 440 used in the examples (and particularly Example 2) of Patent Document 3 has a measured HLB value of 10.5 (refer also to the examples described below). Accordingly, the aqueous inkjet inks specifically disclosed in these examples differ from the aqueous inkjet ink of an embodiment of the present invention in that they do not contain the acetylenediol-based surfactant (A-1) having a measured HLB value within a range from 6 to 9. Further, as mentioned above, although Patent Document 3 targets improvements in the resolubility (redispersibility) and mixed color bleeding properties, no mention is made of the dot circularity and voids that represent objectives of embodiments of the present invention. In particular, Patent Document 3 includes no description nor suggestion regarding the use of a combination of an acetylenediol-based surfactant (A-1) and a siloxane-based surfactant (A-2) with specific measured HLB values in order to obtain printed items with excellent dot circularity.

Each of the components that may be included in the aqueous inkjet ink of one embodiment of the present invention are described below in further detail.

### <Pigment Particles>

The aqueous inkjet ink of an embodiment of the present invention contains pigment particles. Further, these pigment particles contain a pigment and a pigment dispersing resin having a crosslinked structure.

In embodiments of the present invention, the expression, "the pigment dispersing resin has a crosslinked structure", indicates that crosslinking structures are formed between molecules of the pigment dispersing resin. By forming these crosslinking structures between molecules of the pigment dispersing resin, the pigment becomes coated by the pigment dispersing resin having a crosslinked structure, and as described above, this suppresses desorption of the pigment dispersing resin, and facilitates improvements in the resolubility and the jetting stability. The pigment dispersing resin may also have crosslinking structures within the pigment dispersing resin molecules.

In this description, pigment dispersing resins that do not have crosslinking structures between molecules are also referred to as "non-crosslinked dispersing resins", whereas pigment dispersing resins having crosslinking structures between molecules are also referred to as "crosslinked dispersing resins".

### <Pigment>

The pigment particles included in the aqueous inkjet ink of an embodiment of the present invention contain a pigment. Printed items produced using aqueous inkjet inks containing a pigment have high print density. Further, by conducting suitable drying and/or thickening after impact of the ink on the printing substrate, bleeding can be suppressed and printed items of excellent printed image quality can be obtained.

In the aqueous inkjet ink of an embodiment of the present invention, an organic pigment or an inorganic pigment may be used as the pigment. Further, a combination of both may also be used.

In those cases where an inorganic pigment is used as the pigment, examples of pigments that may be used include titanium oxide, zinc oxide, zinc sulfide, white lead, calcium carbonate, precipitated barium sulfate, white carbon, alumina white, kaolin clay, talc, bentonite, carbon black, black iron oxide, cadmium red, red iron oxide, molybdenum red, molybdate orange, chrome vermilion, chrome yellow, cadmium yellow, yellow iron oxide, titanium yellow, chromium oxide, viridian, titanium cobalt green, cobalt green, cobalt chrome green, Victoria green, ultramarine blue, Prussian blue, cobalt blue, cerulean blue, cobalt silica blue, cobalt zinc silica blue, manganese violet and cobalt violet.

For example, in those cases where a carbon black is used as the inorganic pigment, carbon black produced using either the furnace method or the channel method can be used favorably. Further, one of these carbon blacks having characteristics including a primary particle size within a range from 11 to 40 nm, a specific surface area measured by the BET method within a range from 50 to 400 m²/g, a volatile fraction of 0.5 to 10% and a pH value within a range from 2 to 10 can be used particularly favorably.

On the other hand, specific examples of the organic pigment include azo pigments such as azo lake pigments, insoluble monoazo pigments, insoluble diazo pigments and chelate azo pigments; and polycyclic pigments such as phthalocyanine pigments, perylene pigments, perinone pigments, anthraquinone pigments, quinacridone pigments, dioxazine pigments, thioindigo pigments, isoindolinone pigments, quinophthalone pigments, diketopyrrolopyrrole pigments, benzimidazolone pigments and threne pigments. Further, there are no particular limitations on the color of the pigment, and chromatic color pigments of yellow, magenta, cyan, blue, red, orange, and green and the like may be used.

Specific examples of pigments that may be used as the above organic pigment are listed in terms of their color index values. Examples of cyan pigments include C. I. Pigment Blue 1, 2, 3, 15:1, 15:3, 15:4, 15:6, 16, 21, 22, 60 and 64.

Further, examples of magenta pigments include C. I. Pigment Red 5, 7, 9, 12, 31, 48, 49, 52, 53, 57, 97, 112, 120, 122, 146, 147, 149, 150, 168, 170, 177, 178, 179, 184, 188, 202, 206, 207, 209, 238, 242, 254, 255, 264, 269 and 282, and C. I. Pigment Violet 19, 23, 29, 30, 32, 36, 37, 38, 40 and 50.

Furthermore, examples of yellow pigments include C. I. Pigment Yellow 1, 2, 3, 12, 13, 14, 16, 17, 20, 24, 74, 83, 86, 93, 94, 95, 109, 110, 117, 120, 125, 128, 129, 137, 138, 139, 147, 148, 150, 151, 154, 155, 166, 168, 180, 185 and 213.

Further, examples of black pigments include aniline black (C. I. Pigment Black 1), perylene black (C. I. Pigment Black 31 and 32), and azomethine azo black. Furthermore, a plurality of the above cyan pigments, magenta pigments or yellow pigments, or chromatic color pigments such as the brown pigments or orange pigments described below may be mixed together to produce a black pigment.

Examples of pigments that may be used besides those mentioned above include C. I. Pigment Green 7, 10 and 36, C. I. Pigment Brown 3, 5, 25 and 26, and C. I. Pigment Orange 2, 5, 7, 13, 14, 15, 16, 24, 34, 36, 38, 40, 43, 62, 63, 64 and 71.

The pigments exemplified above may be used individually, or a mixture of two or more of the pigments may be used. The content of the pigment, relative to the total mass of the aqueous inkjet ink, is preferably within a range from 0.1 to 20% by mass, more preferably from 1 to 10% by mass, and even more preferably from 2 to 7% by mass.

### <Pigment Dispersing Resin>

The pigment dispersing resin mentioned above is a resin that has a function of dispersing the pigment. The pigment dispersing resin, namely, the non-crosslinked dispersing resin and the crosslinked dispersing resin, are preferably both resins having acid groups within the molecular structure, and it is even more preferable that those acid groups are carboxyl groups and/or carboxylate groups (R-COO⁻). Provided the resin has acid groups (and preferably carboxyl groups and/or carboxylate groups), and has a function of dispersing the pigment, any resin may be used as the pigment dispersing resin.

As described below, resins typically used in inkjet inks usually exist in the form of a water-soluble resin or as resin microparticles. In embodiments of the present invention, either a water-soluble resin or resin microparticles may be used as the non-crosslinked dispersing resin. Further, both water-soluble resins and resin microparticles can be used as the crosslinked dispersing resin. For example, in the case of resin microparticles containing a pigment, it is assumed that the resin contained in the resin microparticles is a resin that has a function of dispersing the pigment (namely, a pigment dispersing resin). In such cases, if the resin has no crosslinking structures between resin molecules, then the resin contained within the resin microparticles is a non-crosslinked dispersing resin, whereas if the resin does have crosslinking structures, then the resin contained within the resin microparticles is a crosslinked dispersing resin. On the other hand, in those cases where, for example, a water-soluble resin is used as the non-crosslinked dispersing resin, a determination as to whether or not the water-soluble resin has a function of dispersing the pigment can be made, for example, using the method prescribed in JIS K 5101-1-4: 2004.

Specifically, 600 g of a carbon black with a primary particle size of 15 to 25 nm, a nitrogen adsorption specific surface area of 120 to 260 m²/g, and a DBP absorption (granular) of 40 to 80 cm³/100g, and 300 g of the target water-soluble resin are mixed thoroughly with 2,100 g of water (premixing), and the resulting mixture was then dispersed for four hours using a beads mill of capacity 0.6 L (for example, a Dyno-Mill manufactured by Shinmaru Enterprises Corporation) filled with 1,800 g of grinding beads (for example, zirconia beads of diameter 0.5 mm). Following dispersion, the viscosity at 25°C of the resulting carbon black dispersion was measured using an E-type viscometer (for example, a TVE25L viscometer manufactured by Toki Sangyo Co., Ltd.), the carbon black dispersion is then stored for one week in an air-blowing constant temperature incubator set to 70°C, and the viscosity was then remeasured. At this time, provided the viscosity of the dispersion measured immediately following the dispersion is not more than 100 mPa·s, and the absolute value of the change in the viscosity of the carbon black dispersion from before and after the storage period is not more than 10%, the water-soluble resin can be deemed to have a function of dispersing the pigment.

Examples of the types of resins that can be used as the pigment dispersing resin include acrylic-based resins, maleic acid-based resins, urethane-based resins, and polyester-based resins and the like. Among these, from the viewpoint of achieving powerful adsorption to the pigment, enabling the dispersive state of the pigment to be stabilized, the use of a resin having aromatic rings within the structure is preferred.

In this description, the term "acrylic-based resin" describes a resin produced using at least one compound selected from the group consisting of acrylic acid, methacrylic acid, acrylate esters and methacrylate esters as a polymerizable monomer. In addition to this polymerizable monomer, a styrene-based monomer may also be used as one of the polymerizable monomers that forms the acrylic-based resin. On the other hand, resins containing maleic acid (anhydride) (at least one compound selected from among maleic acid and maleic anhydride) as a polymerizable monomer are excluded from "acrylic-based resins" in this description. Further, the term "maleic acid-based resin" describes a resin produced using at least maleic acid (anhydride) as a polymerizable monomer. Maleic acid-based resins may also use an α-olefin, styrene-based monomer, acrylic acid, methacrylic acid, acrylate ester or methacrylate ester or the like as a polymerizable monomer.

Both prior to and after conducting the crosslinking treatment described below, at least a portion of the acid groups (for example, carboxyl groups) contained in the pigment dispersing resin are preferably converted to an anionized functional group (for example, a carboxylate group) by neutralization with a basic compound. The reason for this preference is that the resulting charge repulsion between these anionized functional groups enables stable dispersion of the pigment. Examples of the basic compound include ammonia; organic amines such as dimethylaminoethanol, diethanolamine, and triethanolamine; and alkali metal compounds such as lithium hydroxide, sodium hydroxide, potassium hydroxide, cesium hydroxide, disodium carbonate, sodium bicarbonate, dipotassium carbonate, and sodium borate. From the viewpoints of achieving excellent dispersion stability of the pigment within the aqueous inkjet ink, and enabling favorable suppression of pigment aggregation, the use of an alkali metal compound is preferred, and the use of sodium hydroxide and/or potassium hydroxide is particularly desirable. The basic compounds described above may be used alone, or a combination of two or more of the compounds may be used.

Neutralization of the pigment dispersing resin is preferably conducted so that the pH following addition of the total amount of the basic compound to a water-based solution containing 15 to 25% by mass (for example, 20% by mass) of the pigment dispersing resin is within a range from 7 to 12.

In this description, the expression "water-based solution" describes a liquid containing an aqueous solvent and one or more components dispersed and/or dissolved in that aqueous solvent. Further, the above pH value for the water-based solution of the pigment dispersing resin indicates the value at 25°C, and can be measured using typical methods. For example, measurement may be conducted using a desktop pH meter F-71 (manufactured by Horiba, Ltd.) using a pH electrode 6337-10D (manufactured by Horiba, Ltd.).

From the viewpoint of the dispersion stability of the pigment, the ideal amount of the basic compound used to neutralize the pigment dispersing resin, specified in terms of the neutralization rate, is preferably within a range from 10 to 200 mol%, more preferably from 40 to 160 mol%, and particularly preferably from 60 to 120 mol%. Here, the neutralization rate is calculated by dividing the molar amount of basic groups within the added basic compound by the molar amount of acid groups in the pigment dispersing resin, and can be determined using formula 2 shown below. It should be noted that in those cases where a resin that is at least partially neutralized (for example, contains at least carboxylate groups) is used as the pigment dispersing resin, calculation of the neutralization rate is conducted assuming that all acid groups within the resin are not neutralized (specifically, assuming that the carboxylate groups are carboxyl groups).
Formula 2: [Numerical formula 1] $\begin{matrix}Neutralization rate \left[mol%\right] \\ = 100 \times \frac{\left(\frac{mass of basic compound \left[g\right] \times valence of basic group of basic compound}{molecular weight of basic compound}\right)}{\left(\frac{acid value of pigment dispersing resin \left[mgKOH/g\right] \times mass of pigment dispersing resin \left[g\right]}{56.1 \times 1000}\right)}\end{matrix}$

The weight average molecular weight (Mw) of the pigment dispersing resin prior to conducting the crosslinking treatment described below is preferably within a range from 5,000 to 100,000. Provided the weight average molecular weight is at least 5,000, the dispersion stability is favorable, and provided the weight average molecular weight is not more than 100,000, the jetting stability becomes more favorable. The weight average molecular weight is more preferable within a range from 8,000 to 50,000, and even more preferable from 10,000 to 35,000.

The weight average molecular weight of the pigment dispersing resin can be measured using typical methods. For example, a value obtained by measuring the polystyrene-equivalent weight average molecular weight using a GPC apparatus (HLC-8120GPC manufactured by Tosoh Corporation) fitted with a TSKgel column (manufactured by Tosoh Corporation) and an RI detector, using THF as the developing solvent, may be used as the weight average molecular weight.

Further, in terms of ensuring favorable pigment dispersion stability and enabling favorable suppression of desorption of the pigment dispersing resin during the dispersion treatment (details of which are described below) that is conducted prior to the crosslinking treatment, the acid value of the pigment dispersing resin prior to conducting the crosslinking treatment described below is preferably within a range from 60 to 180 mgKOH/g, more preferably from 70 to 160 mgKOH/g, and particularly preferably from 80 to 150 mgKOH/g. By controlling the acid value within this range, desorption of the pigment dispersing resin from the pigment following the crosslinking treatment described below can be largely suppressed, enabling superior resolubility and jetting stability to be obtained.

The acid value of the pigment dispersing resin can be measured using typical methods. For example, approximately 1 g of the pigment dispersing resin that has been subjected to an acid precipitation treatment is weighed accurately into a conical flask, and 50 ml of a mixed solvent containing distilled water / dioxane = 1/9 (mass ratio) is added to dissolve the pigment dispersing resin. This sample solution is then titrated with a 0.1 mol/L ethanol solution of potassium hydroxide (titer F). A potential difference measurement device (for example, an Automatic Potentiometric Titrator AT-710M manufactured by Kyoto Electronics Manufacturing Co., Ltd.) is used for conducting the titration. Using the amount (α (mL)) of the ethanol solution of potassium hydroxide required to reach the titration endpoint, the acid value (mgKOH/g) can be determined using formula 3 shown below. Formula 3: $Acis value \left(mgKOH/g\right) = \left(5.611\times α\times F\right) / S$

In formula 3, S represents the sampled amount (g) of the pigment dispersing resin that represents the sample, α represents the volume (ml) of the 0.1 mol/L ethanol solution of potassium hydroxide titrated to reach the end point, and F represents the titer of the 0.1 mol/L ethanol solution of potassium hydroxide.

The content of the pigment dispersing resin relative to the amount of the pigment is preferably within a range from 1 to 100% by mass. By ensuring that the content of the pigment dispersing resin relative to the amount of the pigment is at least 1% by mass, the viscosity of the aqueous inkjet ink can be suppressed to a value suitable for inkjet printing applications, whereas provided the amount is not more than 100% by mass, the dispersion stability, and the storage stability and jetting stability following dispersion are more favorable. The above amount of the pigment dispersing resin is more preferably within a range from 2 to 50% by mass.

### <<Pigment Dispersing Resin having Crosslinked Structure>>

The pigment dispersing resin included in the aqueous inkjet ink of an embodiment of the present invention has a crosslinked structure. By conducting a crosslinking treatment, the pigment dispersing resin develops a three-dimensional structure, and the solubility of the pigment dispersing resin is reduced. As a result, desorption of the pigment dispersing resin from the pigment can be suppressed. Further, as a result, resolubilizing dried aqueous inkjet ink in the vicinity of the nozzles becomes easier.

Examples of the method used for forming the crosslinking structures (namely, the method used for the crosslinking treatment) include methods in which crosslinking structures are formed by reacting a crosslinking agent with the reactive sites (reactive functional groups such as carboxyl groups and carboxylate groups) of a non-crosslinked dispersing resin that has already been adsorbed to the pigment surface; and methods in which a non-crosslinked dispersing resin having self-crosslinking properties is adsorbed to the pigment surface, and the self-crosslinking groups are then reacted. Among these methods, in terms of offering a broader selection of non-crosslinked dispersing resins that can be used, and making it easier to control the weight average molecular weight and acid value prior to the crosslinking treatment described above, and in terms of making it easier to precisely control the crosslinking rate, methods in which the resin is reacted with a crosslinking agent can be used particularly favorably.

### <<Crosslinking Agent>>

Examples of the above crosslinking agent include isocyanate compounds, aziridine compounds, carbodiimide compounds, oxetane compounds, oxazoline compounds, and epoxy compounds. Further, examples of functional groups (reactive functional groups) that react with the reactive sites of the non-crosslinked dispersing resin include an isocyanate group, aziridine group, carbodiimide group, oxetane group, oxazoline group, and epoxy group. Among these, at least one functional group selected from the group consisting of an aziridine group, carbodiimide group and epoxy group is preferred, and at least an epoxy group is more preferred.

In those cases where a compound having an epoxy group is used as the crosslinking agent, a compound having a plurality of epoxy groups within each molecule is preferably used, the use of a compound having two or more glycidyl ether groups within each molecule is more preferred, and the use of a polyglycidyl ether compound of a polyhydric alcohol having a hydrocarbon group of 3 to 8 carbon atoms is even more preferred. Furthermore, from the viewpoint of achieving a more efficient crosslinking reaction with the reactive sites within the pigment dispersing resin in a liquid medium containing mainly water, the epoxy equivalent weight of the compound having a plurality of epoxy groups within each molecule is preferably within a range from 90 to 300 g/eq., and more preferably from 100 to 200 g/eq.

Specific examples of the compound having a plurality of epoxy groups within each molecule include cyclohexanedimethanol diglycidyl ether, polyethylene glycol diglycidyl ether, 1,6-hexanediol diglycidyl ether, diethylene glycol diglycidyl ether, glycerol polyglycidyl ether, polyglycerol polyglycidyl ether, trimethylolpropane polyglycidyl ether, sorbitol polyglycidyl ether, pentaerythritol polyglycidyl ether, resorcinol diglycidyl ether, neopentyl glycol diglycidyl ether, 4,4'-diglycidyloxybiphenol, bisphenol A diglycidyl ether, hydrogenated bisphenol A diglycidyl ether, phthalic acid diglycidyl ester, terephthalic acid diglycidyl ester, and hydrogenated phthalic acid diglycidyl ester.

The crosslinking agent may be water-soluble or water-insoluble, but from the viewpoint of enabling a more efficient crosslinking reaction with the reactive sites of the pigment dispersing resin in a medium (water-based medium) containing water, the solubility of the crosslinking agent in 100 g of water at 25°C is preferably within a range from 0.1 to 50 g/100g H₂O, more preferably from 0.2 to 40 g/100g H₂O, and even more preferably from 0.5 to 30 g/100g H₂O.

From the viewpoint of reducing desorption of the pigment dispersing resin from the pigment, thereby improving the resolubility and jetting stability, and from the viewpoint of suppressing inhibition of the functions of the surfactants caused by free pigment dispersing resin, thereby improving the wetting properties of the aqueous inkjet ink, the crosslinking agent is preferably added in an amount that yields a functional group content (mol%) represented by formula 4 shown below within a range from 50 to 150 mol%. This functional group content is more preferably within a range from 70 to 120 mol%, and particularly preferably from 80 to 100 mol%.
Formula 4 [Numerical formula 2] $Functional group content \left[mol%\right] = \frac{moles of reactive functional groups in crosslinking agent \times 100}{moles of reactive sites within pigment dispersing resin}$

For example, in those cases where EW (g) of a crosslinking agent having a plurality of epoxy groups within each molecule and having an epoxy equivalent weight of EE (g/eq.) and PW (g) of a pigment dispersing resin prior to crosslinking that has an acid value of AV (mgKOH/g) are mixed together, the functional group content described above can be represented by formula 4-2 shown below. Formula 4-2: $Functional group content \left(mol%\right) = 100 \times \left(EW/EE\right) / \left\{PW\times AV/\left(56.1\times 1000\right)\right\}$

Note, the numerical value 56.1 in the above formula 4-2 represents the molecular weight of potassium hydroxide.

### <Method for Producing Pigment Particles Containing Pigment Dispersing Resin Having Crosslinked Structure>

One example of a method for producing pigment particles containing a pigment dispersing resin having a crosslinked structure (namely, crosslinked pigment particles) involves conducting a dispersion treatment step and a crosslinking treatment step described below in that sequence. Further, although optional, a neutralization treatment step described below may also be performed prior to the above dispersion treatment step. First, the carboxyl groups that exist in the pigment dispersing resin are mixed with a basic compound in a water-based medium, thereby neutralizing at least a portion of the carboxyl groups (the neutralization treatment step). As described above, this neutralization converts the carboxyl groups that exist in the pigment dispersing resin into carboxylate groups. This pigment dispersing resin having at least carboxylate groups is then used in the subsequent step. The pigment dispersing resin obtained following the neutralization treatment step exists in the form of a water-based solution. Next, the pigment is added to this water-based solution of the pigment dispersing resin, and following mixing, a dispersion treatment is conducted (the dispersion treatment step). By performing this dispersion treatment step, an aqueous dispersion of pigment particles (non-crosslinked pigment particles) having the pigment dispersing resin chemically adsorbed to at least a portion of the pigment surface is obtained. The pigment dispersing resin contained in these non-crosslinked pigment particles is a non-crosslinked dispersing resin. Subsequently, a crosslinking agent is added to the aqueous dispersion of the non-crosslinked pigment particles, and a crosslinking treatment is conducted (the crosslinking treatment step). This crosslinking treatment step enables the production of an aqueous dispersion of crosslinked pigment particles.

### <<Neutralization Treatment Step>>

As mentioned above, the pigment dispersing resin used in the dispersion treatment step preferably has anionized functional groups such as carboxylate groups. In those cases where a pigment dispersing resin not having these anionized functional groups (for example, a resin having only carboxyl groups as the acid groups) is used, a method that involves, for example, addition of a basic compound, is preferably used to neutralize at least a portion of the functional groups and convert them to anionized functional groups.

### <<Dispersion Treatment Step>>

The dispersion apparatus used for the dispersion treatment may be any commonly used device, and for example, media-type wet dispersion apparatus, medialess wet dispersion apparatus, and kneading apparatus and the like may be used. Examples of media-based wet dispersion apparatus include ball mills, roll mills, sand mills and beads mills, examples of medialess wet dispersion apparatus include high-pressure homogenizers, and examples of kneading apparatus include typical kneaders. Among these, from the viewpoint of enabling grinding of coarse pigment particles to generate finer particles, selection of a beads mill is preferred. Specific examples of beads mills include a Super Mill, Sand Grinder, Agitator Mill, Glen Mill, Dyno Mill, Pearl Mill and Cobol Mill (all brand names).

Using one of the dispersion apparatus mentioned above, the pigment can be ground using the impact forces and shearing stress generated by the media until the desired particle size is achieved. Among the various possible procedures, from the viewpoint of enabling a pigment dispersion of uniform particle size to be obtained, the pigment and the pigment dispersing resin are preferably subjected to a preliminary dispersion (premixing) before dispersion (the main dispersion) is conducted using the dispersion apparatus described above. Examples of preliminary dispersion apparatus that may be used in the premixing include typical mixing and stirring devices such as a disper mixer or the like.

### <<Crosslinking Treatment Step>>

As described above, by subjecting the pigment dispersing resin adsorbed to the pigment to a crosslinking treatment, pigment particles containing a crosslinked pigment dispersing resin can be obtained. Further, in terms of the method used for the crosslinking treatment, methods in which a crosslinking agent is used to form crosslinking structures can be used particularly favorably. Specifically, a method in which a mixture containing the non-crosslinked pigment particles, a crosslinking agent and water is stirred under heat may be used.

From the viewpoint of enabling the crosslinking reaction to proceed efficiently, the temperature during the crosslinking treatment is preferably within a range from 50°C to 95°C, and more preferably from 70°C to 85°C. Further, from the same viewpoint, the time of the crosslinking treatment is preferably within a range from 0.5 to 10 hours, more preferably from 1 to 8 hours, and even more preferably from 2 to 5 hours.

From the viewpoint of enabling stable jetting from the nozzles, the average particle size of the crosslinked pigment particles is preferably within a range from 60 to 200 nm, more preferably from 70 to 175 nm, and particularly preferably from 80 to 150 nm.

The above average particle size represents the volume-based median size measured using the dynamic light scattering method. For example, measurement may be conducted using a Nanotrac UPA EX-150 manufactured by MicrotracBEL Corporation.

### <Pigment Dispersion>

The crosslinked pigment particles may exist in a dispersed state within a water-based medium, namely, an aqueous dispersion of the crosslinked pigment particles. The aqueous inkjet ink of an embodiment of the present invention is preferably produced using a method in which the aqueous dispersion of the crosslinked pigment particles that has been produced in advance is then mixed with the other raw materials described below, as this type of method enables the jetting stability to be improved.

In this description, a composition containing the pigment particles and the water-based medium is termed a "pigment dispersion". Accordingly, the aqueous dispersion of the non-crosslinked pigment particles and the water dispersion of the crosslinked pigment particles described above are both included within the definition of "pigment dispersion". As described below, the pigment dispersion is used as a raw material for the aqueous inkjet ink, and differs from the aqueous inkjet ink itself. Specifically, the content of the pigment differs in the pigment dispersion and the aqueous inkjet ink. For example, the amount of the pigment in the pigment dispersion, relative to the total mass of the pigment dispersion, is preferably within a range from 10 to 60% by mass, more preferably from 15 to 55% by mass, and even more preferably from 20 to 50% by mass. On the other hand, the ideal amount of pigment included in the aqueous inkjet ink is as described below. Furthermore, if the amount (% by mass) of the pigment contained in the pigment dispersion is deemed PP, and the amount (% by mass) of the pigment contained in the aqueous inkjet ink is deemed PI, then the value of the ratio represented by PP/PI is preferably within a range from 1.5 to 10, and more preferably from 2 to 8.

Further, in this description, the aqueous dispersion of the non-crosslinked pigment particles is specified as the "non-crosslinked pigment dispersion" and the aqueous dispersion of the crosslinked pigment particles is specified as the "crosslinked pigment dispersion".

The pigment dispersion may also be produced by first producing the pigment particles in a dry (solid) state, and then mixing the pigment particles with the water-based medium. Further, the pigment dispersion may also be produced using the method for producing pigment particles containing a pigment dispersing resin having a crosslinked structure described above.

The water-based medium contained in the above pigment dispersion contains at least water. Further, the water-based medium may also contain the types of organic solvents that can be used as raw materials of aqueous inkjet inks (details provided below). For example, the pigment dispersion may contain ethylene glycol, 1,2-propanediol, 1,3-propanediol, 2-methyl-1,3-propanediol, 1,2-butanediol, 1,3-butanediol, 1,2-pentanediol, 1,2-hexanediol or 1,2-octanediol or the like.

The pH of the pigment dispersion is preferably within a range from 8 to 12. Provided the pH is 8 or higher, the anionized functional groups that exist in the pigment dispersing resin can exist stably, and the dispersion stability can be enhanced by charge repulsion. From this viewpoint, a more preferred pH is within a range from 9 to 11. The pH of the pigment dispersion can be measured using the same method as that described above for the water-based solution of the pigment dispersing resin.

### <Surfactants>

The aqueous inkjet ink of an embodiment of the present invention contains the acetylenediol-based surfactant (A-1) having a measured HLB value within a range from 6 to 9 and the siloxane-based surfactant (A-2) having a measured HLB value within a range from 8 to 14 as surfactants.

In this description, the HLB (Hydrophilic-Lipophilic Balance) value is a parameter that indicates the degree of hydrophilicity and hydrophobicity of a material. A smaller HLB value indicates a material of higher hydrophobicity, whereas a larger value indicates a material of higher hydrophilicity. Examples of the method for determining the HLB value include a method of calculating the value from the molecular structure, and a method for measuring the value experimentally. In this description, values obtained by calculating the HLB value based on actual measurements performed in accordance with the method described below (namely, measured HLB values) are used. (1) Firstly, 0.5 g of the target surfactant is dissolved in 5 mL of ethanol. (2) The mixture from (1) is then stirred at 25°C while being subjected to titration with a 2% aqueous solution of phenol. The end point is deemed the point where, when the 2% aqueous solution of phenol is dripped into the mixture, the mixture becomes cloudy and does not return to a transparent state. (3) With the volume of the 2% aqueous solution of phenol added to reach the end point deemed A [mL], the measured HLB value is calculated in accordance with formula 5 shown below. Formula 5: $Measured HLB value = 0.89 \times A + 1.11$

### <<Acetylenediol-Based Surfactant (A-1)>>

The aqueous inkjet ink of an embodiment of the present invention contains the acetylenediol-based surfactant (A-1). In terms of achieving superior wetting properties relative to the printing substrate by exhibiting low affinity with water and orienting rapidly at the gas-liquid interface, the measured HLB value of the acetylenediol-based surfactant (A-1) is preferably within a range from 6 to 9.

Examples of surfactants that may be used as the acetylenediol-based surfactant (A-1) include 2,4,7,9-tetramethyl-5-decyne-4,7-diol, ethylene oxide adducts of 2,4,7,9-tetramethyl-5-decyne-4,7-diol (provided that the number of moles of added ethylene oxide is not more than 1.5 mol), and 2,5,8,11-tetramethyl-6-dodecyne-5,8-diol. Commercially available products can also be used as the acetylenediol-based surfactant (A-1), and specific examples include SURFYNOL DF-110D, and SURFYNOL 104E, 104H, 104A, 104BC, 104DPM, 104PA, 104PG-50 and 420 (all manufactured by Evonik Japan Co., Ltd.), and ACETYLENOL E00 and E13T (manufactured by Kawaken Fine Chemicals Co., Ltd.). Any one of these compounds may be used alone, or a combination of two or more compounds may be used.

From the viewpoint of ensuring excellent printed image quality, the content of the acetylenediol-based surfactant (A-1) within the aqueous inkjet ink is preferably within a range from 0.1 to 5% by mass, and more preferably from 0.3 to 3% by mass. An amount within a range from 0.5 to 2% by mass is particularly preferred.

### <<Siloxane-Based Surfactant (A-2)>>

The aqueous inkjet ink of an embodiment of the present invention contains the siloxane-based surfactant (A-2) having a measured HLB value within a range from 8 to 14. The siloxane-based surfactant (A-2) enables orientation that compensates for the non-uniform orientation of the acetylenediol-based surfactant (A-1), and is therefore effective in improving the dot circularity and reducing unevenness. From this viewpoint, the difference between the measured HLB value of the acetylenediol-based surfactant (A-1) and the measured HLB value of the siloxane-based surfactant (A-2) is preferably within a range from 2 to 7.

Examples of surfactants that may be used as the siloxane-based surfactant (A-2) include siloxane-based gemini surfactants, siloxane-based surfactants having both terminals modified with a polyether, and side chain polyether-modified siloxane-based surfactants. Among these, although the principles are not entirely clear, in terms of reducing unevenness with only a small amount of the surfactant, and achieving printed items with favorable dot circularity, and in terms of improving the jetting stability of the aqueous inkjet ink, the siloxane-based surfactant (A-2) preferably contains a siloxane-based gemini surfactant and/or a siloxane-based surfactant having both terminals modified with a polyether.

Further, from the viewpoints of further enhancing the dot circularity, the wetting properties and the unevenness reduction effect, thereby obtaining printed items with particularly superior printed image quality, and from the viewpoint of enabling the jetting stability to be maintained and improved, the aqueous inkjet ink of an embodiment of the present invention preferably contains at least two types of the siloxane-based surfactant (A-2), and it is even more preferable that one or more of those siloxane-based surfactants (A-2) is a siloxane-based gemini surfactant and/or a siloxane-based surfactant having both terminals modified with a polyether (but excluding siloxane-based gemini surfactants). Furthermore, in terms of achieving an aqueous inkjet ink that exhibits excellent wetting properties on the printing substrate and has superior resolubility and jetting stability, and is capable of producing printed items having favorable dot circularity, it is particularly preferable that the siloxane-based surfactant (A-2) includes at least one siloxane-based gemini surfactant and at least one siloxane-based surfactant having both terminals modified with a polyether (but excluding siloxane-based gemini surfactants).

### <<Siloxane-Based Gemini Surfactants>>

Generally, gemini surfactants have a structure in which surfactants having a hydrophilic structure and a hydrophobic structure are linked together by a linking group (spacer) or a covalent bond. Further, in the case of a siloxane-based gemini surfactant, the siloxane chain (a hydrophobic structure represented by -[O-SiR¹R²]ₓ-, wherein R¹ and R² each represent an arbitrary organic group and x is an integer of 2 or greater) and the hydrophilic structures (for example, polyether chains) may, for example, have the structures described below.
- Structures in which each of the bonding sites between the siloxane chain and the hydrophilic structures exists partway along the siloxane chain and partway along the hydrophilic structure.
- Structures in which a plurality of siloxane chains are linked via linking groups or the like (for example, structures in which at least a portion of the groups represented by R¹ and/or R² in the above siloxane chain structural formula are organic groups containing a siloxane chain).
- Structures in which a plurality of siloxane-based surfactants, each having a plurality of hydrophilic groups, share a portion of those hydrophilic structures.

Gemini surfactants exhibit superior surface tension reduction effects compared with typical surfactants. Accordingly, by using a siloxane-based gemini surfactant, a superior surface tension reduction can be achieved compared with non-gemini siloxane-based surfactants. Moreover, as a result, the wetting properties of the aqueous inkjet ink containing the siloxane-based gemini surfactant can be improved remarkably, and the improvements in dot circularity and unevenness described above can also be achieved.

Examples of commercially available siloxane-based gemini surfactant having a measured HLB value within a range from 8 to 14 include, but are not limited to, TEGO Twin 4100 and TEGO Twin 4200 manufactured by Evonik Japan Co., Ltd.

### <<Siloxane-Based Surfactants Having Both Terminals Modified with a Polyether (but Excluding Siloxane-Based Gemini Surfactants)>>

Siloxane-based surfactants having both terminals modified with a polyether have a structure in which a polyether chain is bonded to each of the two terminals of a polysiloxane skeleton. Aqueous inkjet inks containing a siloxane-based surfactant having both terminals modified with a polyether exhibit improved printed image quality resulting from more uniform wet spreading on the printing substrate, as well as favorable jetting stability. Examples of surfactants that may be used as the siloxane-based surfactant having both terminals modified with a polyether include compounds represented by general formula 6 shown below.

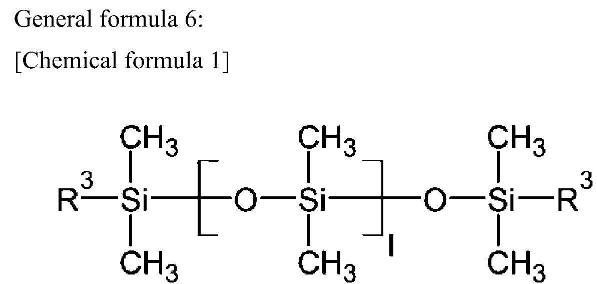

In general formula 6, l represents an integer of 1 to 100, and R3 represents a structure represented by general formula 7 shown below.

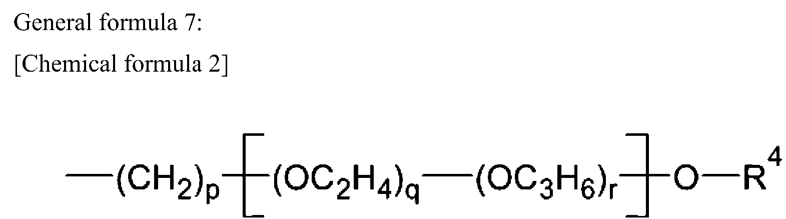

In general formula 7, p represents an integer of 1 to 6, q represents an integer of 1 to 100, and r represents an integer of 0 to 80. However, p+r represents an integer of 1 or greater. Further, R⁴ represents a hydrogen atom, an alkyl group of 1 to 6 carbon atoms, a methacryloyl group, or an acryloyl group. The adducts of ethylene oxide (OC₂H₄) and propylene oxide (OC₃H₆) inside the square brackets [ ] may be arranged randomly or in blocks.

Examples of commercially available products of compounds represented by the above general formula 6 and having a measured HLB value within the range from 8 to 14 include, but are not limited to, BYK-333, BYK-UV3500 and BYK-3420 manufactured by BYK-Chemie GmbH, and TEGO Glide 440 and TEGO Glide 450 manufactured by Evonik Japan Co., Ltd.

### <<Side Chain Polyether-Modified Siloxane-Based Surfactants (but Excluding Siloxane-Based Gemini Surfactants)>>

Side chain polyether-modified siloxane-based surfactants (but excluding siloxane-based gemini surfactants) can be used as the siloxane-based surfactant (A-2). Side chain polyether-modified siloxane-based surfactants, even those with comparatively low molecular weight, exhibit superior orientation in water-based mediums, and therefore exhibit excellent wetting properties. Surfactants represented by general formula 8 shown below are preferably used as the side chain polyether-modified siloxane-based surfactant.

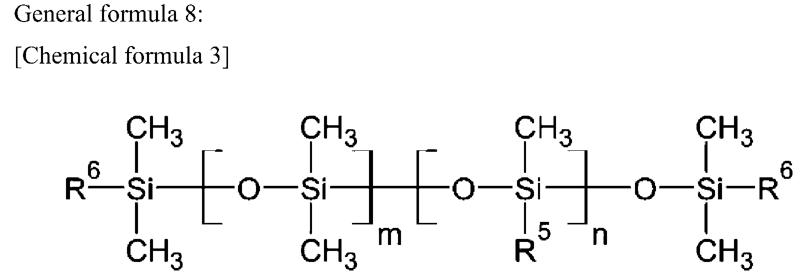

In general formula 8, m represents an integer of 0 or greater, and n represents an integer of 1 or greater, provided that m+n is an integer within a range from 1 to 100. Further, R⁵ is a structure represented by general formula 7 described above, and R⁶ represents an alkyl group of 1 to 6 carbon atoms.

Examples of commercially available products of compounds represented by the above general formula 8 and having a measured HLB value within the range from 8 to 14 include, but are not limited to, BYK-347, BYK-348, BYK-349 and BYK-3451 manufactured by BYK-Chemie GmbH, and TEGO Wet 240, TEGO Wet 250 and TEGO Wet 260 manufactured by Evonik Japan Co., Ltd.

From the viewpoint of ensuring excellent printed image quality, the content of the siloxane-based surfactant (A-2) within the aqueous inkjet ink is preferably within a range from 0.1 to 5% by mass, and more preferably from 0.3 to 3.5% by mass. An amount within a range from 0.5 to 2.5% by mass is particularly desirable.

Furthermore, from the viewpoint of obtaining printed items having excellent dot circularity and no white voids, if the amount of the acetylenediol-based surfactant (A-1) (or if the ink includes two or more acetylenediol-based surfactants (A-1), the total amount of those surfactants) included in the aqueous inkjet ink is deemed 1, then the amount of the siloxane-based surfactant (A-2) (or if the ink includes two or more siloxane-based surfactants (A-2), the total amount of those surfactants) is preferably within a range from 0.3 to 3, and particularly preferably from 0.5 to 2.

### <Organic Solvent>

### <<Specified Organic Solvents>>

The aqueous inkjet ink of an embodiment of the present invention contains an alkanediol having 5 to 8 carbon atoms (but excluding 1,2-alkanediols of 5 to 8 carbon atoms) and/or a glycol monoether represented by a general formula 1 shown above. In this description, these organic solvents are referred to jointly as the "specified organic solvents". These specified organic solvents all have low surface tension, and therefore the acetylenediol-based surfactant (A-1) and the siloxane-based surfactant (A-2) exhibit affinity with these specified organic solvents and diffuse together with the wet spreading of the specified organic solvents to facilitate uniform orientation at the interface. As a result, the occurrence of pinholes in the printed items can be easily suppressed. Further, the meniscus of the aqueous inkjet ink inside the inkjet head can also be stabilized, meaning the jetting stability also improves.

Examples of the alkanediol having 5 to 8 carbon atoms (but excluding 1,2-alkanediols of 5 to 8 carbon atoms) include, but are not limited to, 1,3-pentanediol, 1,4-pentanediol, 2,3-pentanediol, 1,5-pentanediol, 3-methyl-1,5-pentanediol, 1,3-hexanediol, 1,4-hexanediol, 2,3-hexanediol, 3,4-hexanediol, 1,5-hexanediol, 2,2-dimethyl-1,3-pentanediol, 2-methyl-1,3-pentanediol, 3-methyl-1,3-butanediol, 2-methyl-2,4-pentanediol (hexylene glycol), 2-ethyl-1,3-hexanediol, and 1,3-octanediol. Among these, in terms of achieving effective functioning of the mechanism described above, the use of an alkanediol having a particularly low surface tension, namely a surface tension at 25°C within a range from 20 to 30 mN/m, is particularly preferred, to enable uniform orientation of the surfactants within the aqueous inkjet ink, thus improving the jetting stability. On the other hand, although details regarding the mechanism are unclear, from the viewpoint of achieving favorable miscibility with the surfactants described above and remarkably improving the jetting stability, compounds having a quaternary carbon atom (a carbon atom bonded to four atoms other than hydrogen atoms) can be used particularly favorably. Among the compounds exemplified above, examples of compounds having a surface tension at 25°C within a range from 20 to 30 mN/m, and also having a quaternary carbon atom, include 3-methyl-1,3-butanediol and 2-methyl-2,4-pentanediol (hexylene glycol).

On the other hand, examples of the glycol monoether represented by a general formula 1 include, but are not limited to, propylene glycol monoethyl ether, propylene glycol monopropyl ether, propylene glycol monobutyl ether, dipropylene glycol monoethyl ether, dipropylene glycol monopropyl ether, and dipropylene glycol monobutyl ether. Among these, in terms of exhibiting favorable miscibility with the acetylenediol-based surfactant (A-1) and the siloxane-based surfactant (A-2) described above, thereby improving the jetting stability, and also improving the resolubility, the use of a glycol monoether represented by a general formula 1 in which n in the general formula 1 represents 2 is preferred. Specific examples of compounds of the general formula 1 in which n represents 2 include dipropylene glycol monoethyl ether, dipropylene glycol monopropyl ether, and dipropylene glycol monobutyl ether. Further, among these compounds, in terms of expressing particularly suitable effects described above, it is particularly desirable that the aqueous inkjet ink contains dipropylene glycol monopropyl ether.

One of the specified organic solvents described above may be used alone, or a combination of two or more of the solvents may be used. Further, the total content of these specified organic solvents, relative to the total mass of the aqueous inkjet ink, is preferably within a range from 0.5 to 25% by mass, and more preferably from 1 to 20% by mass. A total content within a range from 2 to 15% by mass is particularly desirable.

The inkjet ink of an embodiment of the present invention may also contain an organic solvent other than the specified organic solvents. Examples of this other organic solvent include, but are not limited to, ethylene glycol, 1,2-propanediol, 1,3-propanediol, 2-methyl-1,3-propanediol, 1,2-butanediol, 1,3-butanediol, 1,2-pentanediol, 1,2-hexanediol, 1,2-octanediol, propylene glycol monomethyl ether, dipropylene glycol monomethyl ether, ethylene glycol monopropyl ether, ethylene glycol monobutyl ether, ethylene glycol monohexyl ether, diethylene glycol monomethyl ether, diethylene glycol monoethyl ether, diethylene glycol monopropyl ether, diethylene glycol monobutyl ether, dipropylene glycol monomethyl ether, triethylene glycol monomethyl ether, triethylene glycol monoethyl ether, triethylene glycol monopropyl ether, γ-butyrolactone, and 2-pyrrolidone. These organic solvents may be used alone, or a combination of two or more solvents may be used.

### <Binder Resin>

The aqueous inkjet ink of an embodiment of the present invention preferably contains a resin used as a binder (also referred to as a "binder resin" in this description) in order to improve the drying properties and impart better abrasion resistance.

As described above, water-soluble resins and resin microparticles are the most commonly known forms for the resins used in aqueous inkjet inks. The binder resin contained in the aqueous inkjet ink of an embodiment of the present invention may be either a water-soluble resin or resin microparticles. Further, a combination of a water-soluble resin and resin microparticles may also be used.

In this description, resins having a solubility of at least 1 g in 100 g of water at 25°C are termed "water-soluble resins", and resins having a solubility of less than 1 g are termed "water-insoluble resins". Further, of these water-insoluble resins, resins which disperse in water in a particulate state with a volume-based median size (in this description, also referred to as "D50") within a range from 10 to 1,000 nm are termed "resin microparticles".

The D50 value of the resin microparticles can be measured using the same device and method as those described above for measurement of the average particle size of the crosslinked resin microparticles.

Examples of the types of resins that can be used as a binder resin in the aqueous inkjet ink of an embodiment of the present invention include acrylic-based resins, styrene-based resins, maleic acid-based resins, urethane-based resins, polyester-based resins, vinyl chloride-based resins, vinyl chloride-vinyl acetate-based resins, polyolefin-based resins, and vinyl alcohol-based resins and the like. These types of resins may be used alone, or a combination of two or more types may be used.

In those cases where the aqueous inkjet ink of an embodiment of the present invention contains a binder resin, among the resins exemplified above, the resin used as the binder resin is preferably one or more types of resin selected from the group consisting of acrylic-based resins, urethane-based resins and polyester-based resins.

A preferred content for the binder resin included in the aqueous inkjet ink of an embodiment of the present invention, relative to the total mass of the aqueous inkjet ink, is preferably within a range from 0.1 to 20% by mass, more preferably from 1 to 15% by mass, and particularly preferably from 2 to 10% by mass.

### <Other Components>

Besides the components described above, the aqueous inkjet ink of an embodiment of the present invention may also contain a pH adjuster and other additives. Further, examples of these other additives include crosslinking agents, preservatives, ultraviolet absorbers, and infrared absorbers. A single known compound or a combination of two or more compounds may be used for each of these components.

### <Water>

The water contained in the aqueous inkjet ink of an embodiment of the present invention is preferably ion-exchanged water and/or reverse osmosis water. Further, the content of water included in the aqueous inkjet ink, relative to the total mass of the aqueous inkjet ink, is preferably within a range from 30 to 90% by mass.

### <Method for Producing Aqueous Inkjet Ink>

The aqueous inkjet ink of an embodiment of the present invention can be produced using conventionally known methods. An example of a method involves adding water, the organic solvent, the acetylenediol-based surfactant (A-1), and the siloxane-based surfactant (A-2) and the like to the aqueous dispersion of crosslinked pigment particles produced using the method described above, and after conducting thorough stirring and mixing, coarse particles are removed using a procedure such as filtration or centrifugal separation. However, the method for producing the aqueous inkjet ink of an embodiment of the present invention is not limited to this method.

### <Characteristics of Aqueous Inkjet Ink>

The aqueous inkjet ink of an embodiment of the present invention preferably has a viscosity at 25°C within a range from 3 to 15 mPa·s. Provided the viscosity falls within this range, liquid droplets of the aqueous inkjet ink can be jetted stably not only from inkjet heads having a jetting frequency of about 4 to 10 kHz, but also from inkjet heads having a high frequency of about 20 to 70 kHz. In particular, in those cases where the viscosity at 25°C of the aqueous inkjet ink of an embodiment of the present invention is within a range from 4 to 10 mPa·s, the aqueous inkjet ink can be jetted stably even when using inkjet heads with a design resolution of 600 dpi or higher. In this description, viscosity values are measured in an environment at 25°C using a cone-plate rotational viscometer such as a TVE25L viscometer manufactured by Toki Sangyo Co., Ltd. (an E-type viscometer, cone angle: 1°34').

Further, in terms of obtaining an aqueous inkjet ink having excellent jetting stability and superior printed image quality for the printed items, the static surface tension at 25°C of the aqueous inkjet ink of an embodiment of the present invention is preferably within a range from 18 to 35 mN/m, and particularly preferably from 20 to 30 mN/m. In this description, static surface tension values are measured in an environment at 25°C by the Wilhelmy method (plate method) using an Automatic Surface Tension Meter CBVP-Z manufactured by Kyowa Interface Science Co., Ltd. or the like.

### <Aqueous Inkjet Ink Set>

A single aqueous inkjet ink of an embodiment of the present invention may be used alone, or two or more aqueous inkjet inks may be combined and used as an aqueous inkjet ink set. Examples of this aqueous inkjet ink set include 4-color aqueous inkjet ink sets composed of a cyan aqueous inkjet ink (aqueous cyan ink), a magenta aqueous inkjet ink (aqueous magenta ink), a yellow aqueous inkjet ink (aqueous yellow ink), and a black aqueous inkjet ink (aqueous black ink) (namely, process color ink sets).

### <Inkjet Recording Method>

The aqueous inkjet ink according to an embodiment of the present invention is used in an inkjet printing method. In other words, the aqueous inkjet ink of an embodiment of the present invention is jetted onto a printing substrate from an inkjet head having very fine nozzles (the jetting step). Further, following jetting onto the printing substrate, the aqueous inkjet ink is preferably dried using a drying mechanism (the drying step).

### <<Jetting Step>>

Examples of the operating method for the inkjet head in the above jetting step include the shuttle (scan) method in which jetting and recording of the aqueous inkjet ink are performed while the inkjet head is scanned back and forth in a direction perpendicular to the transport direction of the printing substrate, and the single pass method in which jetting and recording of the aqueous inkjet ink are performed while the printing substrate is passed beneath a fixed inkjet head. The inkjet head equipped with the aqueous inkjet ink of an embodiment of the present invention may employ either the shuttle method or the single pass method. Among these, in terms of avoiding deviations in the impact positions of the aqueous inkjet ink liquid droplets, and improving the printed image quality of the printed items, the single pass method is preferably selected.

With regards to the inkjet head jetting method, any conventionally known method may be selected as required. Examples of jetting methods that may be used include piezo methods that utilize the volume change of a piezoelectric element (piezo element), thermal methods in which the aqueous inkjet ink is jetted via gas bubbles generated by heating with a heater, and valve methods in which the pressurized aqueous inkjet ink is jetted while a nozzle cover (valve) is opened and closed with a solenoid.

In terms of reducing the drying load and improving the printed image quality and the like, the volume of the liquid droplets of the aqueous inkjet ink jetted from the inkjet head is preferably within a range from 0.5 to 20 picoliters, and particularly preferably from 0.5 to 15 picoliters. In terms of improving the printed image quality, the printing conditions (specifically, the drive frequency of the inkjet head, the number of mounted inkjet heads, and the printing speed) are preferably adjusted so that the recording resolution of the printed items is at least 600 dpi, and adjusting the printing conditions so as to achieve a resolution of at least 1,200 dpi is particularly desirable.

### <<Drying Step>>

Examples of the drying method employed by the drying mechanism used in the drying step include heated drying methods, convection drying methods, infrared drying methods (for example, using infrared radiation with a wavelength of 700 to 2,500 nm), microwave drying methods, and drum drying methods. In the drying step, one or more of these drying methods may be selected and used. Further, in those cases where two or more drying methods are employed, each of the drying methods may be performed separately (for example, sequentially), or the methods may be performed simultaneously. For example, by combining a heated drying method and a convection drying method, the aqueous inkjet ink can be dried more quickly than using either of the methods alone.

### <<Printing Substrate>>

Examples of printing substrates that can be used favorably with the aqueous inkjet ink of an embodiment of the present invention include permeable substrates and low-permeability substrates. Among these, from the viewpoint of obtaining printed items of superior printed image quality, a paper substrate is preferably used as the printing substrate.

Examples of the permeable substrates include non-coated papers such as woody papers, medium-quality papers, high-quality papers, and recycled papers; fabrics such as cotton, chemical fiber products, silk, linen and nonwoven fabrics; and leathers and the like. Among these substrates, in terms of obtaining printed items of superior printed image quality, non-coated papers such as woody papers, medium-quality papers, high-quality papers, and recycled papers and the like can be used particularly favorably.

Further, examples of the low-permeability substrates include standard coated papers such as coated papers, art papers, and cast papers. Among these, in terms of obtaining printed items of superior printed image quality, standard coated papers can be used particularly favorably.

The printing substrates exemplified above may have a smooth surface, or an uneven surface. Further, the printing substrate may be in a rolled form or sheet-like form. In addition, a substrate prepared by bonding together two or more of the printing substrates listed above may also be used as the printing substrate. Further, a releasable adhesive layer or the like may be provided on the opposite side from the printing surface, or an adhesive layer or the like may be provided on the printed surface following printing.

In terms of improving the wetting properties of the aqueous inkjet ink of an embodiment of the present invention, and obtaining printed items having superior printed image quality and drying properties, the print surface of the printing substrate described above is preferably subjected to a surface modification treatment such as a corona treatment or a plasma treatment.

The present invention relates to aqueous inkjet inks described below in [1] to [5], and to a printed item produced, described below in [6], using one of the above aqueous inkjet inks.
[1] An aqueous inkjet ink containing pigment particles, surfactants, and an organic solvent, wherein
   the pigment particles contain a pigment and a pigment dispersing resin,
   the pigment dispersing resin has a crosslinked structure,
   the surfactants include an acetylenediol-based surfactant (A-1) having a measured HLB value within a range from 6 to 9, and a siloxane-based surfactant (A-2) having a measured HLB value within a range from 8 to 14, and
   the organic solvent contains an alkanediol having 5 to 8 carbon atoms (but excluding 1,2-alkanediols of 5 to 8 carbon atoms) and/or a glycol monoether represented by a general formula 1 shown below.

      General formula 1: R¹-(O-CH(CH₃)-CH₂)ₙ-OH
   (In general formula 1, R¹ represents an alkyl group of 2 to 4 carbon atoms, and n represents 1 or 2.)
[2] The aqueous inkjet ink according to [1], wherein the siloxane-based surfactant (A-2) having a measured HLB value within a range from 8 to 14 contains a siloxane-based gemini surfactant.
[3] The aqueous inkjet ink according to [1] or [2], wherein the siloxane-based surfactant (A-2) having a measured HLB value within a range from 8 to 14 contains a siloxane-based surfactant having both terminals modified with a polyether (but excluding siloxane-based gemini surfactants).
[4] The aqueous inkjet ink according to [2] or [3], containing two or more types of the siloxane-based surfactant (A-2) having a measured HLB value within a range from 8 to 14.
[5] The aqueous inkjet ink according to [4], wherein the siloxane-based surfactant (A-2) having a measured HLB value within a range from 8 to 14 contains a siloxane-based gemini surfactant and a siloxane-based surfactant having both terminals modified with a polyether (but excluding siloxane-based gemini surfactants).
[6] A printed item obtained by printing the aqueous inkjet ink according to any one of [1] to [5].

The present invention is related to the subject matter disclosed in prior Japanese Application 2023-209882, filed on December 13, 2023, the entire content of which is incorporated by reference herein.

### EXAMPLES

Aqueous inkjet inks of embodiments of the present invention are described below in further detail using a series of examples and comparative examples. In the following description, unless specifically stated otherwise, the units "parts" and "%" represent "parts by mass" and "% by mass" respectively.

### < Production Example for Pigment Dispersing Resin 1>

A reaction vessel fitted with a gas introduction tube, a thermometer, a condenser and a stirrer was charged with 93.4 parts of methyl ethyl ketone, and the interior of the vessel was substituted with nitrogen gas. The inside of the reaction vessel was then heated to 110°C, and a mixture of 25 parts of styrene, 25 parts of acrylic acid, 20 parts of methyl methacrylate and 30 parts of lauryl methacrylate as polymerizable monomers, and 6 parts of a polymerization initiator V-601 (manufactured by Wako Pure Chemical Corporation) was added dropwise to the reaction vessel over a period of two hours. Following completion of the dropwise addition, reaction was continued for three hours while the inside of the reaction vessel was held at 110°C, and then an additional 0.6 parts of the V-601 (manufactured by Wako Pure Chemical Corporation) was then added, and the reaction was continued for a further one hour at 110°C, thus synthesizing a pigment dispersing resin 1. The thus obtained pigment dispersing resin 1 had a weight average molecular weight measured using the method described above of 29,000, and an acid value of 196 mgKOH/g. Subsequently, the amount of potassium hydroxide required to achieve a neutralization rate of 100% was calculated from the acid value of the pigment dispersing resin 1, and a potassium hydroxide aqueous solution with a concentration of 48% by mass containing an amount of potassium hydroxide equal to the calculated amount was added. Subsequently, ion-exchanged water was added to adjust the solid fraction concentration to 20%, and the mixture was then stirred at 50°C for one hour, thus obtaining a water-based solution of the pigment dispersing resin 1 (solid fraction concentration: 20%).

### <Production Examples for Pigment Dispersing Resins 2 to 10>

With the exception of using the monomers shown in Table 1 as the polymerizable monomers, water-based solutions of pigment dispersing resins 2 to 10 (each having a solid fraction concentration of 20%) were obtained using the same raw materials and operations as those described above for the pigment dispersing resin 1. Note, the pigment dispersing resins 1 to 10 are non-crosslinked dispersing resins.

**[Table 1]**

| | Monomer composition | | | | Weight average molecular weight | Acid value |
|---|---|---|---|---|---|---|
| | St | AA | MMA | LMA | | |
| Pigment dispersing resin 1 | 25 | 25 | 20 | 30 | 29,000 | 196 |
| Pigment dispersing resin 2 | 25 | 23 | 22 | 30 | 19,500 | 180 |
| Pigment dispersing resin 3 | 25 | 20.5 | 24.5 | 30 | 20,000 | 160 |
| Pigment dispersing resin 4 | 25 | 19 | 26 | 30 | 10,000 | 149 |
| Pigment dispersing resin 5 | 25 | 15 | 30 | 30 | 35,000 | 116 |
| Pigment dispersing resin 6 | 25 | 17 | 28 | 30 | 40,000 | 116 |
| Pigment dispersing resin 7 | 25 | 11 | 34 | 30 | 15,000 | 85 |
| Pigment dispersing resin 8 | 25 | 8 | 37 | 30 | 25,000 | 63 |
| Pigment dispersing resin 9 | 25 | 9.5 | 35.5 | 30 | 18,500 | 74 |
| Pigment dispersing resin 10 | 25 | 7.5 | 37.5 | 30 | 31,000 | 59 |

The meanings of the abbreviations used in Table 1 have the following meanings. Further, the weight average molecular weight and acid value of each of the pigment dispersing resins 1 to 10 are also listed in the table.
- St: styrene
- AA: acrylic acid
- MMA: methyl methacrylate
- LMA: lauryl methacrylate

### <Production Example for Aqueous Dispersion 1 of Non-Crosslinked Pigment Particles>

First, 20 parts of a pigment LIONOL BLUE FG-7351 (C.I. Pigment Blue 15:3, manufactured by TOYOCOLOR Co., Ltd.), 25 parts of the water-based solution of the pigment dispersing resin 1 (solid fraction concentration: 20%), and 55 parts of ion-exchanged water were mixed, and following preliminary dispersion using a disper mixer, a main dispersion was conducted using a Dyno-Mill of capacity 0.6 L filled with 1,800 g of zirconia beads of diameter 0.5 mm. Following the main dispersion, 33.3 parts of ion-exchanged water was added to the obtained pigment dispersion. Subsequently, the resulting mixture was heated at 60°C, and following removal of a portion of the water and the methyl ethyl ketone contained in the water-based solution of the pigment dispersing resin 1 by distillation under reduced pressure, ion-exchanged water was further added to adjust the pigment concentration to 15%, thus obtaining an aqueous dispersion 1 of cyan-colored non-crosslinked pigment particles (pigment concentration: 15%).

### <Production Examples for Aqueous Dispersions 2 to 10 of Non-Crosslinked Pigment Particles>

With the exception of using the water-based solutions of each of the pigment dispersing resins 2 to 10 instead of the water-based solution of the pigment dispersing resin 1, aqueous dispersions 2 to 10 of cyan-colored non-crosslinked pigment particles were obtained using the same raw materials and the same method as that described above for the aqueous dispersion 1 of non-crosslinked pigment particles. In each case the pigment concentration was 15%.

### <Production Example for Aqueous Dispersion 1 of Crosslinked Pigment Particles>

First, 93.3 parts of the aqueous dispersion 1 of non-crosslinked pigment particles obtained above, 1.5 parts of a crosslinking agent DENACOL EX-321 (an epoxy compound manufactured by Nagase ChemteX Corporation, epoxy equivalent weight: 140 g/eq.) (an amount that yields a functional group content represented by formula 4 shown above of 90 mol%), and 5.2 parts of ion-exchanged water were mixed, and following heating of the mixture to 80°C under constant stirring, the temperature was held at 80°C for three hours to complete the crosslinking treatment. Subsequently, ion-exchanged water was added to adjust the pigment concentration to 14%, thus obtaining an aqueous dispersion 1 of cyan-colored crosslinked pigment particles (pigment concentration: 14%).

### <Production Examples for Aqueous Dispersions 2 to 14 of Crosslinked Pigment Particles>

With the exception of altering the type of non-crosslinked pigment particles aqueous dispersion used and the amounts added of the various raw materials as shown in Table 2, aqueous dispersions 2 to 14 of cyan-colored crosslinked pigment particles were obtained using the same method as that described above for the water dispersion 1 of crosslinked pigment particles. The pigment concentration was 14% in each water dispersion.

**[Table 2]**

| | Cyan non-crosslinked water dispersion | | Crosslinking agent | | Functional group content (mol%) | Ion-exchanged water |
|---|---|---|---|---|---|---|
| | Type | Amount | Type | Amount | | Amount |
| Aqueous dispersion 1 of cyan-colored crosslinked pigment particles | CB1 | 93.3 | DENACOL EX-321 | 1.5 | 90 | 5.2 |
| Aqueous dispersion 2 of cyan-colored crosslinked pigment particles | CB2 | 93.3 | DENACOL EX-321 | 1.4 | 90 | 5.3 |
| Aqueous dispersion 3 of cyan-colored crosslinked pigment particles | CB3 | 93.3 | DENACOL EX-321 | 1.3 | 90 | 5.4 |
| Aqueous dispersion 4 of cyan-colored crosslinked pigment particles | CB4 | 93.3 | DENACOL EX-321 | 1.2 | 90 | 5.5 |
| Aqueous dispersion 5 of cyan-colored crosslinked pigment particles | CB5 | 93.3 | DENACOL EX-321 | 0.9 | 90 | 5.8 |
| Aqueous dispersion 6 of cyan-colored crosslinked pigment particles | CB6 | 93.3 | DENACOL EX-321 | 0.9 | 90 | 5.8 |
| Aqueous dispersion 7 of cyan-colored crosslinked pigment particles | CB7 | 93.3 | DENACOL EX-321 | 0.9 | 90 | 5.8 |
| Aqueous dispersion 8 of cyan-colored crosslinked pigment particles | CB8 | 93.3 | DENACOL EX-321 | 0.7 | 90 | 6.0 |
| Aqueous dispersion 9 of cyan-colored crosslinked pigment particles | CB9 | 93.3 | DENACOL EX-321 | 0.8 | 90 | 5.9 |
| Aqueous dispersion 10 of cyan-colored crosslinked pigment particles | CB10 | 93.3 | DENACOL EX-321 | 0.7 | 90 | 6.0 |
| Aqueous dispersion 11 of cyan-colored crosslinked pigment particles | CB5 | 93.3 | DENACOL EX-321 | 0.7 | 70 | 6.0 |
| Aqueous dispersion 12 of cyan-colored crosslinked pigment particles | CB5 | 93.3 | DENACOL EX-321 | 0.6 | 60 | 6.1 |
| Aqueous dispersion 13 of cyan-colored crosslinked pigment particles | CB5 | 93.3 | DENACOL EX-321 | 1.1 | 110 | 5.6 |
| Aqueous dispersion 14 of cyan-colored crosslinked pigment particles | CB5 | 93.3 | DENACOL EX-321 | 1.3 | 130 | 5.4 |

### <Production Example for Binder Resin 1>

A binder resin 1, an A-B block polymer, was produced using the method disclosed in Example 21 of International Patent Publication WO2008/139980. Specifically, in the polymerization of the first block, methacrylic acid was used as the polymerizable monomer, and by conducting reaction at 80°C for two hours and then performing re-precipitation, a first block copolymer with added iodine was obtained. The weight average molecular weight (Mw) of this first block copolymer was 6,000. Next, using this first block copolymer and a mixture of styrene, methyl methacrylate and lauryl methacrylate in a mass ratio of 15:65:15 as polymerizable monomers, a reaction was conducted at 80°C for 2.5 hours and then performing re-precipitation, a binder resin 1 was obtained in which the iodine addition sites of the first block described above had been substituted with a second block formed from the styrene, methyl methacrylate and lauryl methacrylate. The weight average molecular weight (Mw) of the binder resin 1 was 18,000, and the acid value was 40. By mixing, stirring and completely dissolving the obtained binder resin 1 in an amount (mass ratio) of ion-exchanged water 1.5 times the mass of the resin, a water-based solution of the A-B block polymer binder resin 1 (solid fraction concentration: 40%) was obtained.

### <Production of Aqueous Inkjet Inks>

The raw materials shown in Table 3 were mixed thoroughly by stirring with a disper mixer until a uniform composition was obtained, and an aqueous inkjet ink was produced by subsequently filtering the resulting mixture through a membrane filter with a pore size of 0.8 µm to remove any coarse particles that can cause head blockages.

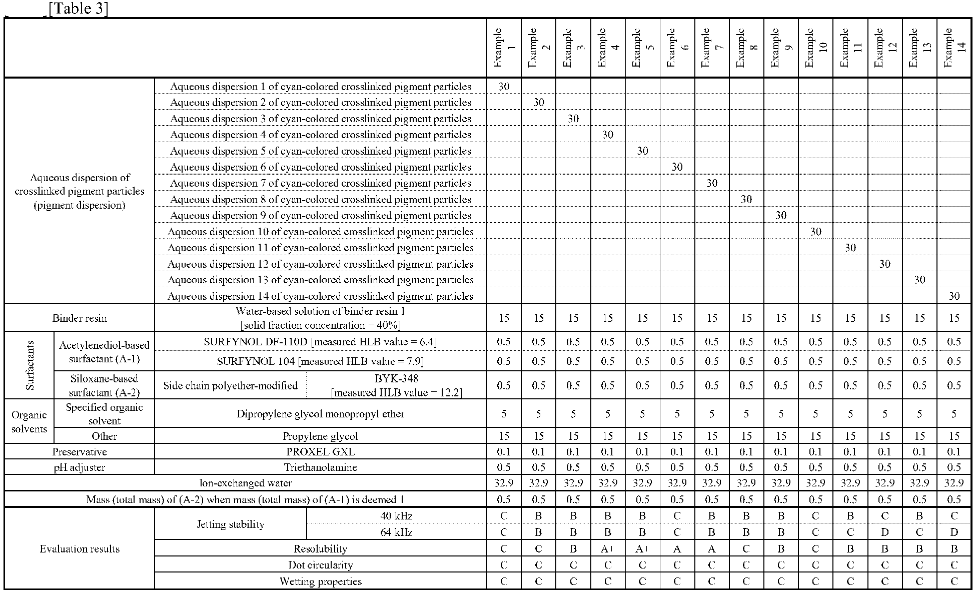

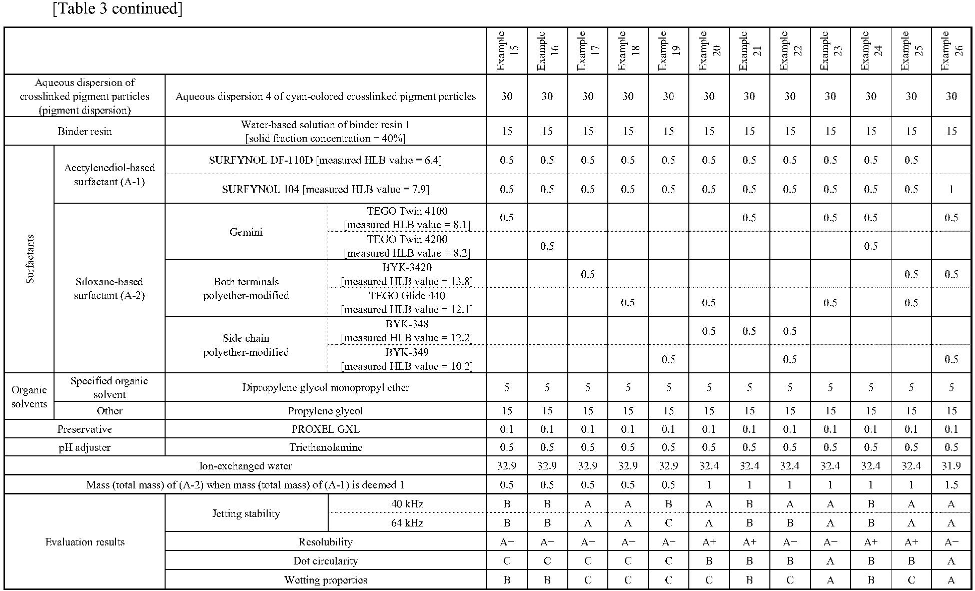

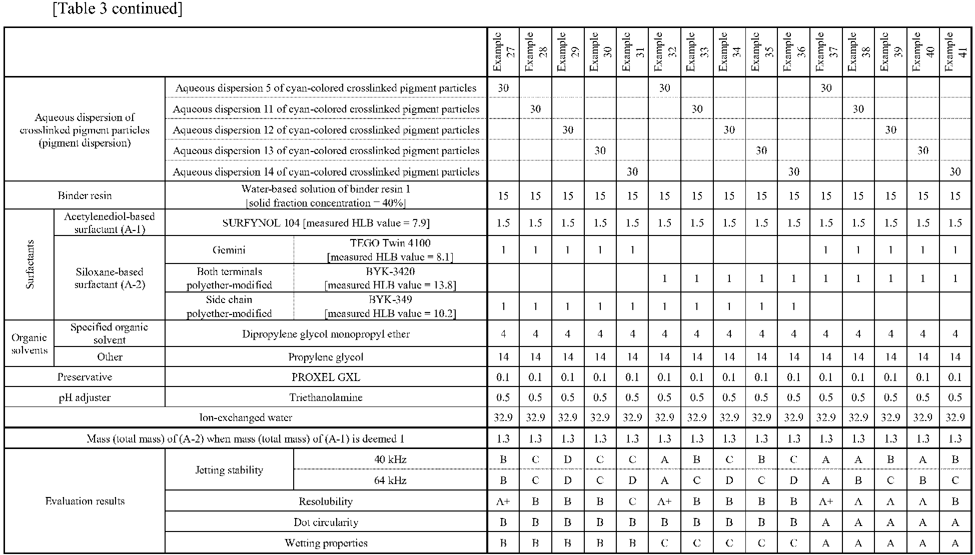

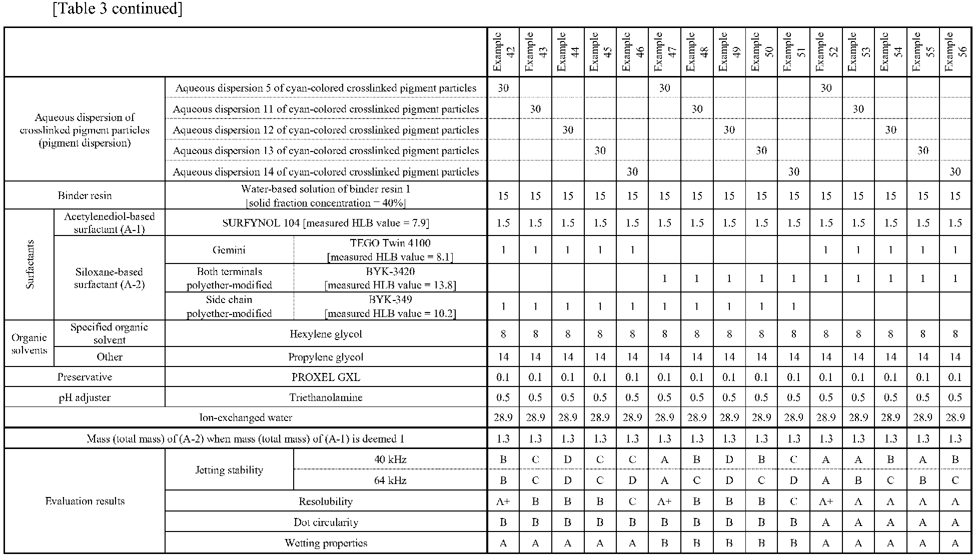

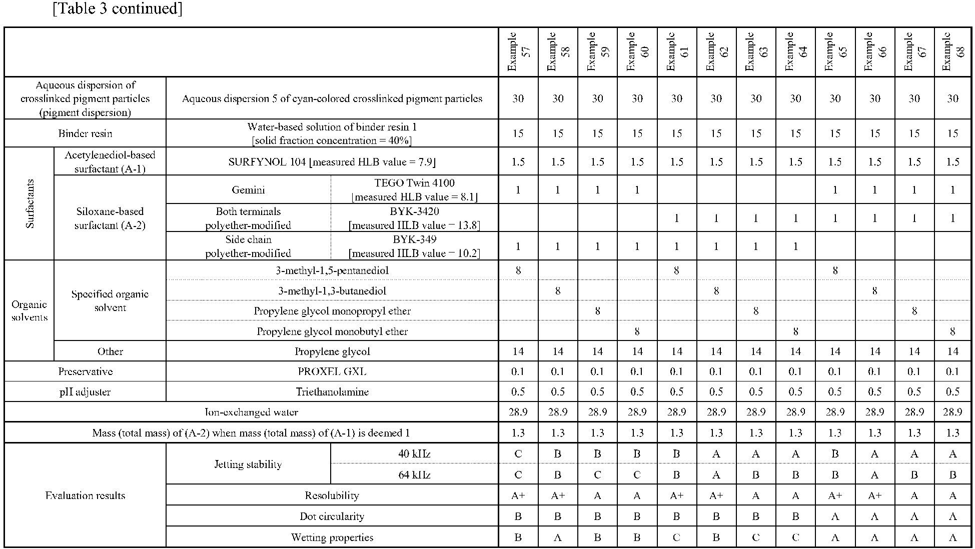

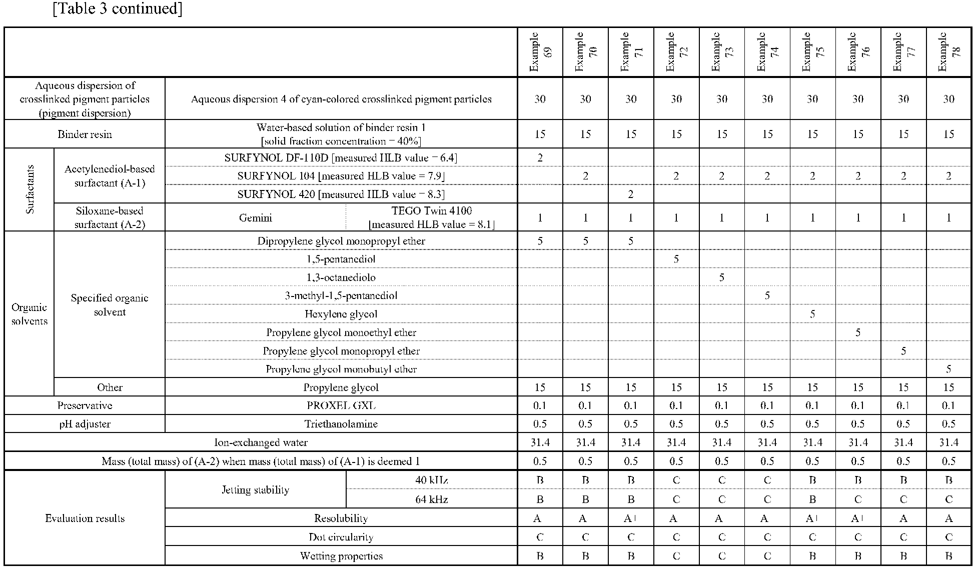

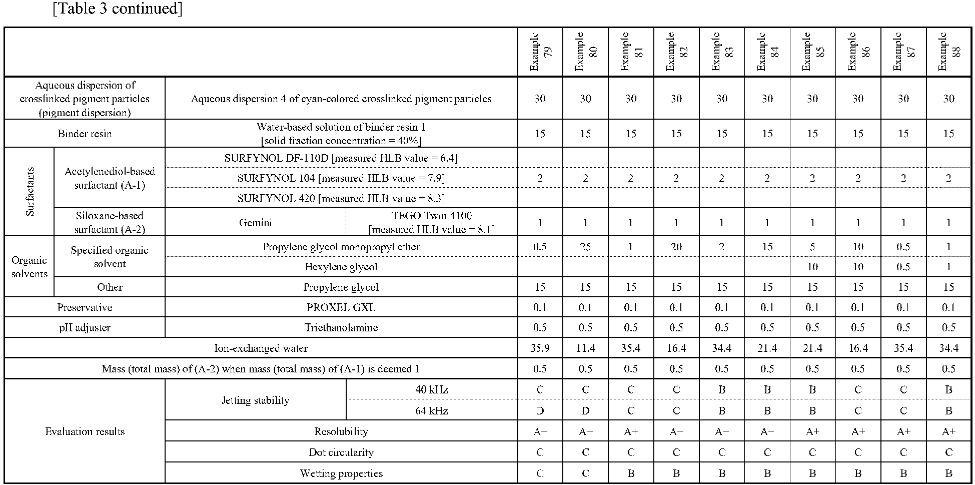

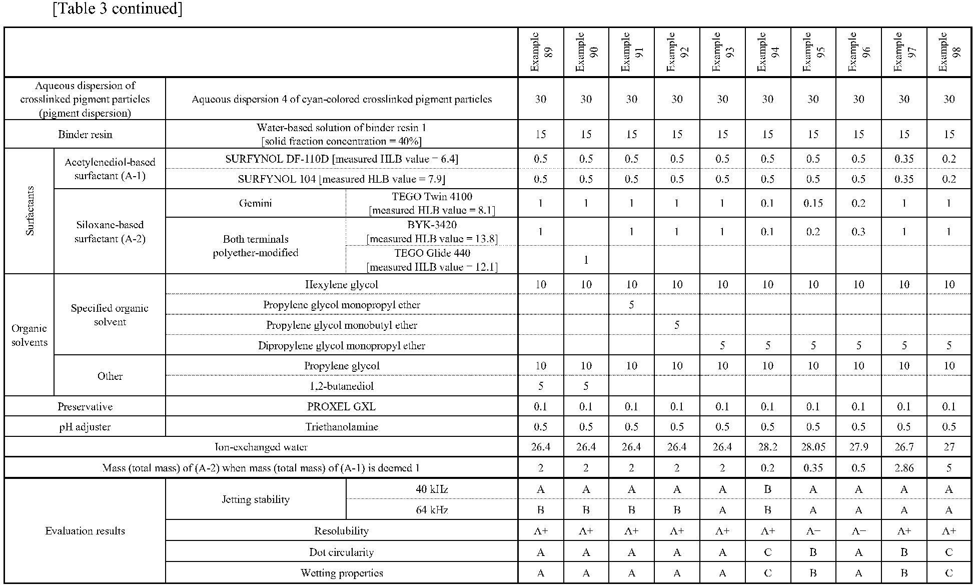

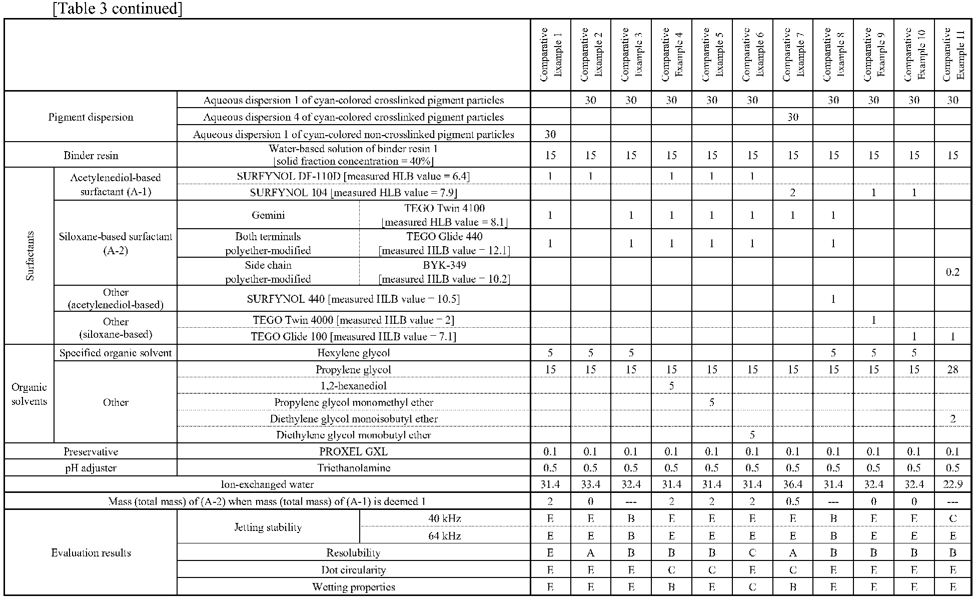

The abbreviations used in Table 3 have the following meanings.
- SURFYNOL DF-110D (an acetylenediol-based surfactant manufactured by Evonik Japan Co., Ltd., measured HLB value = 6.4)
- SURFYNOL 104 (an acetylenediol-based surfactant manufactured by Evonik Japan Co., Ltd., measured HLB value = 7.9)
- SURFYNOL 420 (an acetylenediol-based surfactant manufactured by Evonik Japan Co., Ltd., measured HLB value = 8.3)
- SURFYNOL 440 (an acetylenediol-based surfactant manufactured by Evonik Japan Co., Ltd., measured HLB value = 10.5)
- TEGO Twin 4100 (a siloxane-based gemini surfactant manufactured by Evonik Japan Co., Ltd., measured HLB value = 8.1)
- TEGO Twin 4200 (a siloxane-based gemini surfactant manufactured by Evonik Japan Co., Ltd., measured HLB value = 8.2)
- TEGO Twin 4000 (a siloxane-based gemini surfactant manufactured by Evonik Japan Co., Ltd., measured HLB value = 2.0)
- TEGO Glide 440 (a siloxane-based surfactant having both terminals modified with a polyether, manufactured by Evonik Japan Co., Ltd., measured HLB value = 12.1)
- BYK-3420 (a siloxane-based surfactant having both terminals modified with a polyether, manufactured by BYK-Chemie GmbH, measured HLB value = 13.8)
- TEGO Glide 100 (a siloxane-based surfactant having both terminals modified with a polyether, manufactured by Evonik Japan Co., Ltd., measured HLB value = 7.1)
- BYK-348 (a side chain polyether-modified siloxane-based surfactant, manufactured by BYK-Chemie GmbH, measured HLB value = 12.2)
- BYK-349 (a side chain polyether-modified siloxane-based surfactant, manufactured by BYK-Chemie GmbH, measured HLB value = 10.2)
- Propylene glycol (surface tension: 36.5 mN/m)
- 1,5-pentanediol (surface tension: 42.2 mN/m)
- 1,3-octanediol (surface tension: 35.0 mN/m)
- 3-methyl-1,5-pentanediol (surface tension: 38.1 mN/m)
- 3-methyl-1,3-butanediol (surface tension: 29.9 mN/m)
- Hexylene glycol (2-methyl-2,4-pentanediol, surface tension: 29.1 mN/m)
- 1,2-butanediol (surface tension: 31.6 mN/m)
- 1,2-hexanediol (surface tension: 26.5 mN/m)
- Dipropylene glycol monopropyl ether (surface tension: 25.6 mN/m)
- Propylene glycol monoethyl ether (surface tension: 26.3 mN/m)
- Propylene glycol monopropyl ether (surface tension: 25.9 mN/m)
- Propylene glycol monobutyl ether (surface tension: 26.3 mN/m)
- Propylene glycol monomethyl ether (surface tension: 26.7 mN/m)
- Diethylene glycol monoisobutyl ether (surface tension: 24.7 mN/m)
- Diethylene glycol monobutyl ether (surface tension: 27.9 mN/m)

### [Examples 1 to 98, Comparative Examples 1 to 11]

Using each of the aqueous inkjet inks of Examples 1 to 98 and Comparative examples 1 to 11 produced in the manner described above, the following evaluations were conducted. The evaluation methods for the prepared aqueous inkjet inks were as follows. The evaluation results were as shown above in Table 3.

### <Evaluation of Jetting Stability>

Each of the aqueous inkjet inks was used to fill an inkjet printing apparatus mounted with a head (KJ4B-1200) manufactured by Kyocera Corporation and installed in an environment at 25°C. A nozzle check pattern was printed, and once it had been confirmed that the aqueous inkjet ink was being jetted normally from all of the nozzles, and then 100 copies of a solid image with a print coverage rate of 100% were printed continuously onto OK TopCoat + paper manufactured by Oji Paper Co., Ltd., under printing conditions including a resolution of 1200 × 1200 dpi and a drop volume of 3 pl. Subsequently, the nozzle check pattern was reprinted, and the number of nozzle failures was counted visually to evaluate the jetting stability. The drive frequency for the above inkjet head was set to either 40 kHz or 64 kHz, and an evaluation was conducted at each drive frequency. Further, the evaluation criteria were as follows, with a grade of D or better being deemed a practically applicable level.
A: absolutely no nozzle failures
B: from 1 to 3 nozzle failures
C: from 4 to 6 nozzle failures
D: from 7 to 9 nozzle failures
E: 10 or more nozzle failures

### <Evaluation of Resolubility>

One drop of each ink was dripped onto a glass plate, and the glass plate was placed in a thermos-hygrostat at a temperature of 50°C and a humidity of 40% to dry the ink. After a period of time had passed, the glass plate was removed from the thermos-hygrostat, pure water was dripped onto the (dried) coating film, and a visual confirmation was made as to whether or not the coating film returned to an aqueous inkjet ink. The resolubility was evaluated by altering the standing time in the thermos-hygrostat and repeating the above evaluation. The evaluation criteria were as follows, with a grade of C or better being deemed a practically applicable level.
A+: even after drying for 40 minutes, the coating film returns to a visually uniform aqueous inkjet ink, with absolutely no foreign substances such as dried coating film or pigment aggregates
A: even after drying for 30 minutes, the coating film returns to a visually uniform aqueous inkjet ink, with absolutely no foreign substances such as dried coating film or pigment aggregates, but after drying for 40 minutes, foreign substances were visually apparent after dripping of the pure water
B: after drying for 20 minutes, the coating film returns to a visually uniform aqueous inkjet ink, with absolutely no foreign substances such as dried coating film or pigment aggregates, but after drying for 30 minutes, foreign substances were visually apparent after dripping of the pure water
C: after drying for 10 minutes, the coating film returns to a visually uniform aqueous inkjet ink, with absolutely no foreign substances such as dried coating film or pigment aggregates, but after drying for 20 minutes, foreign substances were visually apparent after dripping of the pure water
E: after drying for 10 minutes, foreign substances were visually apparent

### <Evaluation of Dot Circularity>

Each of the aqueous inkjet inks was used to fill the inkjet printing apparatus used in the above jetting stability evaluation. Subsequently, under the same printing conditions as those used in the above jetting stability evaluation, and using the same printing substrate, a gradation image was printed. This "gradation image" is an image in which the print coverage rate is varied continuously from 5 to 60% within a predetermined region. Following printing of the gradation image, the OK TopCoat + paper printed with the aqueous inkjet ink was placed in an air oven at 70°C for one minute to dry the ink, thus obtaining a gradation printed item. The portion within this gradation printed item in which the print coverage rate was 10% was then observed using an image evaluation device (PIAS-II manufactured by Quality Engineering Associates Inc.), and the dot circularity was measured. The closer this circularity is to 1, the closer the dot shape is to a true circle, indicating a favorable dot shape. The evaluation criteria were as follows, with a grade of C or better being deemed a practically applicable level.
A: the circularity was at least 1 but not more than 2
B: the circularity exceeded 2 but not more than 3
C: the circularity exceeded 3 but not more than 3.5
E: the circularity was greater than 3.5

### <Evaluation of Wetting Properties>

Each of the aqueous inkjet inks was used to fill the inkjet printing apparatus used in the above jetting stability evaluation. Subsequently, under the same printing conditions as those used in the above jetting stability evaluation, and using the same printing substrate, a solid image with a print coverage rate of 100% was printed. Following printing of this solid image, the resulting printed item was dried for one minute using a 70°C air oven. The wetting properties were evaluated by confirming the degree of white voids in the thus obtained solid image, both by visual inspection and under a magnifying glass. The evaluation criteria were as follows, with a grade of C or better being deemed a practically applicable level.
A: absolutely no white voids were seen, either upon visual inspection or under the magnifying glass
B: a few white voids were seen under the magnifying glass, but were not noticeable on visual inspection
C: a few white voids were seen on visual inspection
E: white voids were seen clearly on visual inspection

As is evident from Table 3, the aqueous inkjet inks evaluated in Examples 1 to 98 exhibited practically applicable levels of quality in terms of resolubility, jetting stability, dot circularity and wetting properties. In particular, the aqueous inkjet inks of Examples 23, 26, 37, 38, 40, 52, 53, 55, 66 to 68, 89 to 93 and 96 exhibited an "A" level in the evaluation of jetting stability when the inkjet head was operated using a drive frequency of 40 kHz, and also exhibited either an "A" or "A+" level in each of the evaluations of resolubility, dot circularity and wetting properties. These results indicate that using a combination of a siloxane-based gemini surfactant and a siloxane-based surfactant having both terminals modified with a polyether as the siloxane-based surfactant (A-2), adjusting the (total) amount of the siloxane-based surfactant (A-2) to a value within a range from 0.5 to 2 relative to an amount of 1 for the (total) amount of the acetylenediol-based surfactant (A-1) contained in the aqueous inkjet ink, and adjusting the functional group content (mol%) represented by the above formula 4 to a value within a range from 70 to 120% are extremely effective in achieving the objects of the present invention described above.

Furthermore, among the examples described above, the aqueous inkjet inks of Examples 23, 26, 37, 52, 66, 93 and 96 exhibited an "A" or "A+" level for all of the evaluations, including the evaluation of the jetting stability when the inkjet head was operated using a drive frequency of 64 kHz. In these aqueous inkjet inks, in addition to the elements described above, the ink also contained at least one compound selected from the group consisting of 3-methyl-1,3-butanediol, 2-methyl-2,4-pentanediol (hexylene glycol) and dipropylene glycol monopropyl ether as the specified organic solvent, confirming that these compounds are particularly effective in realizing the objects of the present invention described above.

In contrast, Comparative Example 1 is a system in which the pigment dispersing resin has not been subjected to a crosslinking treatment. It was confirmed that because the adsorption of the pigment dispersing resin to the pigment was unsatisfactory, the printed image quality and resolubility deteriorated due to desorption of the pigment dispersing resin, and none of the quality evaluations were of a level appropriate for practical use.

Further, in Comparative Examples 2, 9 and 10, which did not contain the siloxane-based surfactant (A-2), the acetylenediol-based surfactant was not able to be oriented uniformly at the gas-liquid interface, and the wetting properties and dot circularity on coated paper were unsatisfactory. Furthermore, a deterioration in the jetting stability was also confirmed, presumably resulting from non-uniform orientation of the acetylenediol-based surfactant in the vicinity of the nozzles.

On the other hand, in Comparative Examples 3 and 8, which did not contain the acetylenediol-based surfactant (A-1), the wetting properties were inadequate, and the printed items also exhibited poor dot circularity.

Moreover, the aqueous inkjet inks of Comparative Examples 4 to 7 and 11 did not contain an alkanediol having 5 to 8 carbon atoms (but excluding 1,2-alkanediols of 5 to 8 carbon atoms) and/or a glycol monoether represented by the above general formula 1 as an organic solvent. The evaluation results revealed that the surfactants did not exhibit sufficient miscibility and their orientation was in a non-uniform manner at the nozzle interface, resulting in a loss in jetting stability. A deterioration in the printed image quality was also observed. Further, the aqueous inkjet ink of Comparative Example 11 also lacks the acetylenediol-based surfactant (A-1), and in a same manner to Comparative Examples 3 and 8, was unable to reach a practically applicable level in terms of the dot circularity and the wetting properties.

## Claims

1. An aqueous inkjet ink comprising pigment particles, surfactants, and an organic solvent, wherein
the pigment particles comprise a pigment and a pigment dispersing resin,
the pigment dispersing resin has a crosslinked structure,
the surfactants include an acetylenediol-based surfactant (A-1) having a measured HLB value within a range from 6 to 9, and a siloxane-based surfactant (A-2) having a measured HLB value within a range from 8 to 14, and
the organic solvent comprises an alkanediol having 5 to 8 carbon atoms (but excluding 1,2-alkanediols of 5 to 8 carbon atoms) and/or a glycol monoether represented by a general formula 1 shown below:
General formula 1 R¹-(O-CH(CH₃)-CH₂)ₙ-OH
wherein in general formula 1, R¹ represents an alkyl group of 2 to 4 carbon atoms, and n represents 1 or 2.

2. The aqueous inkjet ink according to Claim 1, wherein the siloxane-based surfactant (A-2) having a measured HLB value within a range from 8 to 14 comprises a siloxane-based gemini surfactant.

3. The aqueous inkjet ink according to Claim 1, wherein the siloxane-based surfactant (A-2) having a measured HLB value within a range from 8 to 14 comprises a siloxane-based surfactant having both terminals modified with a polyether (but excluding siloxane-based gemini surfactants).

4. The aqueous inkjet ink according to Claim 1, comprising two or more types of the siloxane-based surfactant (A-2) having a measured HLB value within a range from 8 to 14.

5. The aqueous inkjet ink according to Claim 4, wherein the siloxane-based surfactant (A-2) having a measured HLB value within a range from 8 to 14 comprises a siloxane-based gemini surfactant and a siloxane-based surfactant having both terminals modified with a polyether (but excluding siloxane-based gemini surfactants).

6. A printed item obtained by printing the aqueous inkjet ink according to any one of Claims 1 to 5.
